# EUROPEAN PATENT SPECIFICATION

(11) **EP 1 493 124 B1**
(45) Date of publication and mention of the grant of the patent: **26.07.2006**
(21) Application number: 03743789.4
(22) Date of filing: 12.03.2003
(51) Int. Cl.: G06F 3/033

(54) **A TOUCH PAD AND A METHOD OF OPERATING THE TOUCH PAD**
BERÜHRUNGS-PAD UND VERFAHREN ZUM BETREIBEN DES BERÜHRUNGS-PAD
CLAVIER TACTILE, STYLET A UTILISER AVEC CELUI-CI, ET PROCEDE DE FONCTIONNEMENT DUDIT CLAVIER TACTILE

(30) Priority: 13.03.2002 DK 200200375
(43) Date of publication of application: 05.01.2005
(73) Proprietor: O-Pen ApS, 2100 Copenhagen (DK)
(72) Inventor: ELIASSON, Jonas, Ove, Philip, DK-1705 Copenhagen V (DK); OESTERGAARD, Jens, Wagenblast, Stubbe, DK-4320 Lejre (DK)
(74) Representative: Inspicos A/S
(86) International application number: PCT/DK2003/000155
(87) International publication number: WO 2003/077192

(56) References cited:
- US-A- 4 688 933
- US-A- 5 166 668

## Description

The present invention relates to an improved touch pad and in particular to a touch pad which receives the light within a light transmissive means and determines where the light entered the means. Touch screens of this type have the advantage that they may e.g. be made quite hard and more resistant to excessive pressure. Also, a number of additional features, such as the addition of keyboards etc may be obtained.

Touch pads and other types of systems for entering information into a computer may be seen from US-A-6172667, disclosing the features of the precharacterizing part of claims 1 and 25, US-A-4710760, describing the use of angle detectors and triangulation on the basis of radiation transmitted inside a light transmissive layer, but where the radiation does not enter into the transmissive layer through its surface at the touch location, as well as from US-A-4,772,763, JP-A-58010232, JP-A-59202533, JP-A-11232025, WO02/095668, WO02/077915, US-A-4,692,809, US-A-5,945,981, US-A-5,227,622, US-A-5,166,668, and EP-A-1 209 554.

In a first aspect, the invention relates to a touch pad according to claim 1.

Thus, instead of transmitting the light through the light transmissive means, the light is transmitted therein and to the light receivers.

In the present context, a means is light transmissive, when, at at least one wavelength present in the light received, the absorption of the light is sufficiently small to have at least part of the light reach the receiving means. This or these wavelength(s) may be in the visible spectrum, the infrared spectrum, and/or the ultraviolet spectrum. Preferably, the means is able to transmit at least 50 % of most of the wavelengths in the visible spectrum over a distance from a majority of positions of the first surface and the receiving means.

Preferred materials for the light transmissive means may be glass, polycarbonate, transparent polyethylenes, PET, acrylate, ABS, nylon, styrene, or similar materials.

An interesting feature of the present invention is the fact that the light received is transmitted inside the light transmissive means and along the first surface. Thus, light received is now redirected and at least partly guided by the means and not merely transmitted straight through as would be the case in e.g. a projection screen. Naturally, the amount of the light actually received and redirected by the light transmissive means will depend on the angle under which the light enters as well as the wavelength etc. Thus, in order to obtain a suitable angle, the light is preferably provided close to the first surface in the form of a non-collimated beam.

In this context, other elements, such as the flexible element mentioned further below, may also take part in the guiding of the redirected light. The receiving means are thus positioned so as to receive light transmitted along the first surface. These means may be positioned in a plane of the light transmissive means or a plane parallel with a plane of the first surface.

The light received and guided inside the light transmissive means will propagate in the means depending on the shape thereof, its surfaces (reflecting properties), its absorbance etc. Also, depending on the intensity distribution of the light, its direction of transmission may be both in the direction of the first surface and a direction perpendicular to that. At least part of the received light will be reflected from a surface of the light transmissive means and thereby be guided toward the receiving means.

Preferably, the light transmissive means is at least substantially flat. In this manner, flat touch screens may be provided. Also, the light guiding properties and the ability to actually receive the light is improved in flat means.

For a number of reasons, the light transmissive means is preferably planar in that that shape is the easiest surface to follow when writing etc. However, any shape of the transmissive means may be used as long as it facilitates light guidance between the position of entry of the light and the receiving means. In fact, bent touch pads may have advantages in that one, e.g. a planar, area may be used for normal "writing" and other areas, such as sides of the pad, may be used for buttons or predetermined areas (see further below).

A number of interesting embodiments relate to what information is actually derived from the light received. Normally, the output of the receiving means would be position information (such as an angle at which a maximum of light intensity was received) or a voltage/current relating to a light intensity received. Other information may relate to a variation in the light intensity (see further below) or to the wavelength or wavelength interval/mix of the light.

In one embodiment, the determining means may use standard triangulation in order to perform the determination of the position. Also, naturally, more than two receiving means may be used in order to e.g. increase a precision in the determination of the position or to increase an area within which light or positions may be identified, received or determined.

In the present context, the position at which the light is received will normally be a position at or on the first surface at which the light actually enters the light transmissive means and starts propagating within the light transmissive means. This position may be determined in any coordinate system and e.g. as an absolute or relative distance/angle from any other point or position of the touch pad.

A touch screen may be obtained when combining the above touch pad with a display or monitor, the monitor or display being positioned so as to provide or display information provided or displayed thereby through the first surface of the light transmissive means.

In another embodiment, the light transmissive means comprises an at least substantially flat light transmissive member having at a surface thereof a light transmissive coating or layer, an upper surface of which forms the first surface of the light transmissive means. This coating or layer may be used for protecting the means from scratches or may provide a mirroring or non-reflecting surface. A coating may be hard, such as hard silicone, or a hydrophilic surface.

An interesting type of member is one comprising a light transmissive display or monitor, whereby the touch pad is, again, a touch screen, now with the "pad" positioned below the monitor/display.

In another embodiment, the touch pad further comprises a flexible element positioned at or on the first surface and a light emitter adapted to transmit light into the flexible element, the element being adapted to have a part thereof depressed toward the first surface and to direct light from the flexible element into the member at the depressed part. The depression of the part will narrow the light path at that point. Also, the depressed surface part of the flexible element may form a convex surface acting as a mirror reflecting light from the flexible element toward and through the first surface. This flexible element may be made of e.g. silicone, polyurethane, nylon, PVC, and/or transparent polyethylenes, and may have a thickness of 0.01mm-10mm, such as 0.25mm-5mm, preferably ½-1 mm.

In that embodiment, the flexible element may have a first side comprising a number of predetermined first areas adapted to be depressed toward the first surface and a second side having, at areas opposite to the predetermined first areas, second areas which, in a first, non-depressed position, have a distance to the first surface and, in a second, depressed position, abut the first surface. This flexible element may be a keyboard, where the first areas define the keys. Preferably, each first area has a corresponding second area and vice versa. The difference in refractive index between the flexible element and, on the one hand, air, (the distance between the flexible element and the first surface) and, on the other hand, the first surface, ensures that (at least substantially) no light is transmitted to the first surface in the first position but is in the second position.

From the knowledge of the positions of the second areas, the touch pad may be able to determine which first area was depressed and thereby which action to take.

It should be noted that the light having now passed the first surface, as described above, may be guided by the light transmissive means as well as the flexible member, depending on the border between these parts. If light may pass the border, light may travel into the flexible member and back into the light transmissive means. This has no impact on the position of the receiving means or the operation of the pad.

The two positions of the second areas are an additional manner (other than merely e.g. an index difference between the flexible member and the light transmissive means or the use of collimated light not impinging on the interface) of preventing light from travelling from the flexible element to the first surface at non-intended positions. Preferably, the flexible element also has, between the second areas, means for preventing unintended transmission of light from the flexible element to the first surface.

A keyboard-like feature may also be provided when the touch pad comprises a depressing means having a first side comprising a number of predetermined first areas adapted to be depressed toward the first surface and a second side having, at areas opposite to the predetermined first areas, depression elements which, in a first, non-depressed position, do not to any substantial degree depress the flexible member and, in a second, depressed position, depress the flexible member. Preferably, the depressing means is a flat means having a first, upper side and a second, lower side, and where the opposite positions are positioned above and below each other.

Different depressing means may be provided, thus providing an easy replacement of keyboards, the use of specialized keyboards (for games etc) and the use of the same basic module for pads for different countries.

Means may also be provided in order for the touch pad to know which keyboard is used and how to interpret light transmitted from a given point at the first surface.

An interesting depressing means comprises an at least substantially stiff member being rotatable in relation to a remaining part of the depressing means, the stiff member having, at its first side, a plurality of the first areas and, at its second side, a plurality of the depression elements.

This stiff member may be a depressible pad or area, which may be rotatable in a plane at least substantially parallel to a plane of the first surface so as to provide a rotatable member (such as for scrolling in menus or controlling other means). In this manner, light-receiving portions may be obtained of the first surface, which portions move during rotation of the pad. Another manner is to have the member rotate around an axis at least substantially parallel to a plane of the first surface, in which manner, only one or a number of the depressing means at the second side thereof may engage the flexible member at the same time. A combination of the two rotations may be selected.

A third manner of providing e.g. a keyboard is one comprising an element having a first side having a number of first predetermined positions for engagement of a user and a second side having a number of second positions or areas corresponding to the first positions, the element being adapted to, when a first position is engaged by the user, emit light from the corresponding second position, the second side being positioned so that the light emitted may be received by the first surface.

Preferably, the detecting means have, for each area or point, a reflecting means or lens means for directing the light received at the area or point on to the detectors.

In the preferred embodiment, the receiving means comprise means for detecting light emitted at a predetermined point of the first surface in two different directions and means for determining the position of the predetermined point from the directions in which the light was detected.

Preferably, the detecting means comprise reflecting means or lens means for directing the light emitted in the two different directions on to the detectors.

In general, the pad may further comprise a plurality of slots provided between the predetermined point at the first surface and the one-dimensional detectors, the detecting points/areas of the one-dimensional detectors being at least substantially equidistant. When, e.g. a distance between two adjacent slots being different from a multiple of a distance between two adjacent areas/points of a detector, these slots will be able to increase the resolution of the position/angle determination.

Several one-dimensional detectors may be used for the same detection in order to increase the resolution when either the slots/apertures are angled to a row and line direction of the detectors if their detecting points/areas are positioned in rows and lines. If the rows and lines are at straight angles to each other, slanted apertures may be used. Optionally, vertical apertures may be used when the lines and rows are not at straight angles to each other.

Preferably, the detectors comprise a CCD detector, such as a CCD detector being a two-dimensional detector having a number of rows of detecting points/areas, and wherein each detector comprises at least one row of the CCD detector.

Then, the pad could further comprise means for directing light from surroundings of the touch pad to one or more other rows of the CCD detector. This light could be an image from the outside of the pad, which image is then detected by the CCD detector

Also, a filter means or the reflecting/lens means could be adapted to transmit at least substantially only light within a predetermined wavelength interval. In this manner, noise from incident light, such as sunlight may be reduced or avoided.

Preferably, the touch pad is used together with a stylus or pen adapted to emit light from a point (that is, an end part) thereof, the stylus or pen being adapted to transmit light into the light transmissive means when touching and/or being translated over the first surface.

An interesting embodiment further comprises means for receiving light from outside the pad and in a plane at least substantially parallel to the first surface and for transporting the light into the light transmissive means, the determining means being adapted to determine a position outside the pad from which the light is emitted.

In that embodiment, the receiving means preferably comprise at least two lens means or mirror means positioned so as to direct light from the outside of the pad (such as light from the sun or external light emitters/lamps) along the plane into the light transmissive means. The lens or mirror means preferably form part of the light transmissive means.

This pad preferably further comprises means for directing light transported into the light transmissive means by the transporting means to the determining means.

This embodiment may then actually derive position information also from the outside of the touch pad. The pad may be positioned at a working surface and then derive information from drawings etc. made on that working surface.

In fact, 3D position information may be derived in that a lens/mirror means may be provided for also receiving light out of the plane: This received light is then also transported to the detector/receiving means. This additional information may be separated from the other information by providing it with a particular wavelength (the use of e.g. fitters or a specific light emitter used to emit the light) or the light may be transmitted to its own detector, such as a separate row of a CCD detector.

One particular use may be seen in relation to a particular stylus or pen having:
- a first light transmitting channel along a predetermined axis of the stylus or pen,
- means for providing light into and along the transmitting channel,
- means for outputting the light from the transmitting channel,
- a receiving channel being adapted to receive light output from the transmitting channel and having been reflected outside the pen or stylus, and
- means for directing light from the receiving channel toward the receiving means of the pad.

This stylus/pen may be used for e.g. reading bar codes in that the bars may have differing reflective properties, which will result in a variation of the amount of light reflected and thereby directed toward the pad.

The external work area may also be used as e.g. a newspaper or brochure, which is identified by the user (such as by a bar code or other information - such as the taking of a picture thereof). Subsequent to identification, the user may, using a stylus or other light provider, demarcate or identify e.g. products, which the user wishes to purchase or fill in forms etc. This information is then derived by the pad, which may transmit the information, such as by wireless Ethernet or a mobile telephone (if the pad is not part of the mobile telephone as it is) to e.g. the provider of the products or the issuer of the brochure/newspaper.

A pen/stylus for use in the above touch pad may have a light providing means and means for emitting light provided from a point of the stylus. The point of the stylus may be flexible. A flexible point may be made of e.g. silicone or polyurethane. In addition, the point may be made hydrophilic in order to reduce friction or the risk of scratching. Also, the light providing means may be a light emitter. Additionally, the light providing means could comprise means for receiving light-from one or more surrounding light emitter(s), such as a solar cell or a lens - or a mirroring surface positioned at the point of the stylus. This mirroring surface may reflect light provided by the pad itself -such as light transmitted close to the first surface.

A stylus with a flexible point may be used for providing different e.g. line thicknesses when e.g. drawing and for providing information relating to a force exerted during the drawing/writing. This last aspect is particularly interesting in electronic signatures in that, now, not only the positions (the signature itself as written) and the velocity at predetermined points may be used for identifying the signor, but also the pressure exerted at predetermined points.

Furthermore, the pen/stylus could have means for varying an intensity and/or wavelength of the light emitted, the variation being controlled by a controlling means controllable by a user. In this manner, the stylus may be used as e.g. a computer mouse now also having one or more buttons. Then, the controlling means preferably comprises an area of the stylus, the area being adapted to be exposed to pressure or depression by the user, exposure to pressure or depression will make the controlling means vary the intensity and/or wavelength.

This variation may be used for a number of purposes: the pad may be adapted to only function with a given stylus or group of stylus, whereby the pad will not react to light entered not having a predetermined intensity variation/wavelength contents/polarisation. Also, different stylus may be decided to provide different colours on a monitor illustrating what is drawn on the pad. Alternatively or additionally, the variation may be taken as e.g. a mouse click, and the pad may respond correspondingly as is seen in normal PC's.

A stylus or pen could have:
- a first light transmitting channel along a predetermined axis of the stylus or pen,
- means for providing light into and along the transmitting channel,
- means for outputting the light from the transmitting channel,
- a receiving channel being adapted to receive light output from the transmitting channel and having been reflected outside the pen or stylus, and
- means for outputting the light from the receiving channel.

A further aspect of the invention relates to a method according to claim 25.

As indicated above, the method could comprise a display or monitor (making it a touch screen) providing or displaying information through the first surface of the light transmissive means.

Also, the providing step may comprise providing a light transmissive means comprising an at least substantially flat light transmissive member having at a surface thereof a light transmissive coating or layer, an upper surface of which forms the first surface of the light transmissive means. Then, the providing step could comprise providing a member comprising a light transmissive display or monitor - again providing a touch screen.

In one embodiment, the touch pad further comprises a flexible element positioned at or on the first surface and a light emitter, the light emitter transmitting (preferably collimated) light into the flexible element, the method comprising the step of depressing a part of the element toward the first surface and directing light from the flexible element into the member at the depressed part.

This depression may provide an upper surface of the flexible element reflecting the light through the first surface.

The flexible element may have a first side comprising a number of predetermined first areas adapted to be depressed toward the first surface and a second side having, at areas opposite to the predetermined first areas, second areas, the method comprising depressing one or more of the first areas and bringing the one or more corresponding second areas from a first, non-depressed position in which the corresponding second area(s) have a distance to the first surface into a second, depressed position, where the corresponding second area(s) abut the first surface. Then, the method may further comprise the step of preventing transmission of light from the flexible element to the first surface between the second areas.

Alternatively or in addition, the touch pad could comprise a depressing means having a first side comprising a number of predetermined first areas adapted to be depressed toward the first surface and a second side having, at areas opposite to the predetermined first areas, depression elements, the method comprising depressing one or more of the first areas of the depressing means so as to bring one or more of the corresponding depression elements from a first, non-depressed position in which they do not to any substantial degree depress the flexible member, to a second, depressed position in which they depress the flexible member.

In this embodiment, the depressing means could comprise an at least substantially stiff member having, at its first side, a plurality of the first areas and, at its second side, a plurality of the depression elements, the method comprising rotating the stiff member in relation to a remaining part of the depressing means so as to bring one or more second areas from the first to the second positions. As indicated above, the axis of rotation may be in a plane of the first surface or at an angle thereto depending on the actual use of the stiff member.

In another embodiment, the touch pad further has an element having a first side having a number of first predetermined positions for engagement of a user and a second side having a number of second positions or areas corresponding to the first positions, the method comprising the step of, when a first position is engaged by the user, emitting light from the corresponding second position and receiving the emitted light by the first surface.

Then, the method may comprise directing, using a reflecting means or lens means, the light received at the area or point on to the detectors.

Also, the detecting and determining steps could comprise detecting light emitted at a predetermined point of the first surface in two different directions and determining the position of the predetermined point from the directions in which the light was detected. Then, preferably, the method preferably comprises directing, using reflecting means or lens means, the light emitted in the two different directions on to the detectors.

In general, the resolution could be increased by e.g. the step of providing a pluratity of slots or apertures between the predetermined point at the first surface and the one-dimensional detectors, the detecting points/areas of the one-dimensional detectors being at least substantially equidistant, and a distance between two adjacent slots being different from a multiple of a distance between two adjacent areas/points of a detector.

In the preferred embodiment, the touch pad comprises a two-dimensional CCD detector having a number of rows of detecting points/areas, wherein the detecting step comprises detecting light transmitted by the transmissive means by one or more of the rows of detecting points/elements. Then, the method could further comprise the step of directing light from surroundings of the touch pad to one or more other rows of the CCD. Also, the method could further comprise the step of transmitting at least substantially only light within a predetermined wavelength interval in order to e.g. reduce noise from incident light (sun light or the like).

As indicated above, the step of providing the light preferably comprises providing a stylus or pen emitting light from a point thereof and transmits light into the light transmissive means when touching and/or being translated over the first surface.

An interesting embodiment is one, which further comprises the steps of:
- receiving light from outside the pad and in a plane at least substantially parallel to the first surface and
- transporting the light into the light transmissive means,
the determining step comprising determining a position outside the pad from which the light is emitted.

This embodiment may further comprise providing at least two lens means or mirror means positioned so as to direct light from the outside of the pad along the plane into the light transmissive means. Also, the steps of providing the light transmissive means and the lens or mirror means could comprise providing the light transmissive means and the lens/mirror means as a single/monolithic element. In addition, the method could comprise the step of directing light transported into the light transmissive means by the transporting means to the determining means.

The method could also comprise the step of translating a stylus or pen having:
- a first light transmitting channel along a predetermined axis of the stylus or pen,
- means for providing light into and along the transmitting channel,
- means for outputting the light from the transmitting channel,
- a receiving channel being adapted to receive light output from the transmitting channel and having been reflected outside the pen or stylus, and
- means for directing light from the receiving channel toward the receiving means of the pad over a surface having areas of varying light reflection, the light or stylus directing light of varying intensity toward the touch pad,
wherein the determining step comprises determining information from the variation in the light intensity.

Furthermore, the method could comprise providing light at the first surface using a stylus or pen, the method further comprising the step of varying an intensity and/or wavelength of the light emitted, the variation being controlled by a controlling means controllable by a user, and wherein the determining step comprises detecting the variation (and perhaps acting accordingly). Then, the varying step preferably comprises the user depressing an area of the stylus, the depression facilitating the variation of the intensity and/or wavelength.

In the following, a preferred embodiment of the invention will be described in relation to the drawing, wherein:
- Figs. 1-3 illustrate different selections of flexible stylus point and flexible layer,
- Fig. 4 illustrates an overlay keyboard,
- Fig. 5 illustrates a rotating disc or joystick for use with the keyboard of Fig. 4,
- Fig. 6 illustrates a new type of icon and navigation in the system,
- Figs. 7 and 8 illustrate different types of overlay keyboards,
- Fig. 9 illustrates the use of apertures/slots,
- Fig. 10 illustrates the function of apertures/slots,
- Figs. 11 and 12 illustrate a preferred set-up of the present invention,
- Fig. 13 illustrates a particular type of useful CCD detector for use in accordance with the invention,
- Fig. 14 illustrates a preferred embodiment adapted for 3D position determination external to the pad,
- Fig. 15 illustrates a bar code reader for use external to the pad, and
- Fig. 16 illustrates the use of the preferred invention for deriving information provided on a white board external to the pad.

### Preferred embodiment of O-pen touch screen

The preferred embodiment concerns a method to produce a passive and/or active and/or responsive and/or internal and/or external optical touch screen with a flip over Keyboard including joystick and scroll functionality by employing various means which can be "tailor made" or found as integral parts of many electronic devices such as digital CCD, light source, software, ROM, processor, power supply, print, a screen and a transparent screen cover (25) including special layers and mirrors and aperture and filters + various means for writing with a lighted or a reflective pointed tool both possible to combine with ordinary writing tools and means for presenting reflections from barcodes.

All the below-described functionality is preferably controlled by a single controller, 64, of the pad.

### CCD for digital detection of position

A CCD is used as light detector because it is cheap, energy economic + 100% digital and thus possible to build into coming single chip mobile phones. The digital image sensor is expected to follow Moore's law and double performance concerning key parameters such as resolution, energy consumption, position update frequency sensitivity etc. every 18 month. This means that competing touch screen technologies with analogue components cannot keep pace with the quality development.

### CCD synchronising with incoming light signal and ambient light

In order to pick up the strongest possible signal with the best signal/noise ratio the software tunes the CCD to the exact same frequency as the signal emitting light source. Both the pen and the CCD tune in to the same frequency that is out of synchronicity with the local electric grid net.

### CCD matching screen luminance to ambient light

The CCD measures the ambient light and set the screen luminance to an adequate level. This feature saves energy by optimising the power for screen luminance to a minimum.

### Screen cover (25) with optics for internal and external touch screen

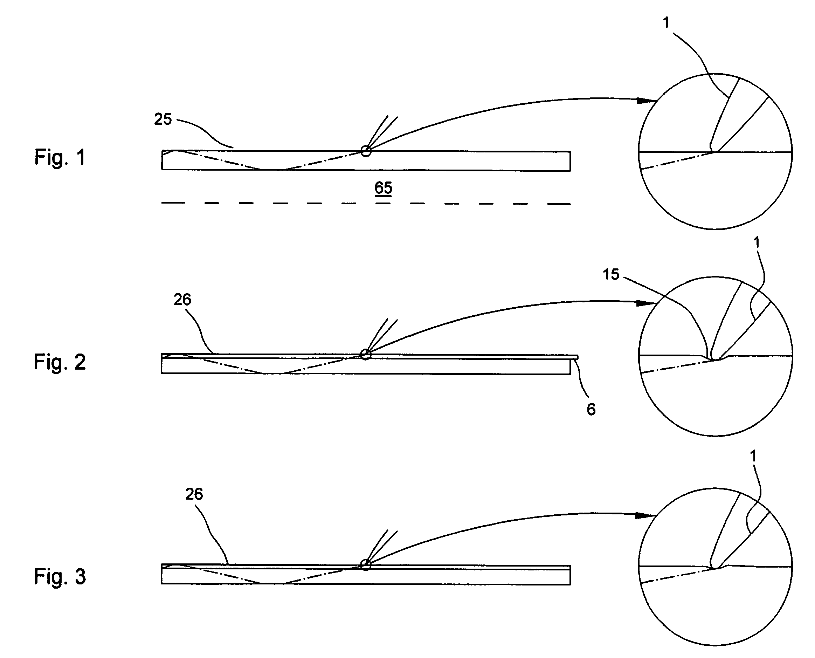

O-pen technology is based on digital imaging of light that enters into a transparent layer above or under a screen. If the angles of light are bigger than the Brewster angle then most of the light will pass right through and if the angles of light are smaller then most of the light will bounce right of the surface. Only close optical contact between the screen cover (25) - see Figs. 1-3 - and a light emitting source such as a pen point (1) enables light to pass into the screen cover (25) and because of the Brewster angle the light moves in straight lines inside the screen cover (25) until it is absorbed. The touch screen functionality can be established anywhere beneath or above the transparent screen cover (25), even 360 degrees around an irregular object.

A display or monitor 65 is illustrated in Fig. 1, which makes the touch pad function also as a touch screen.

O-pen technology can be incorporated into for instance a mobile terminal with slight alterations of the screen cover (25) and simple modifications of software and/or the electronic components.

The screen cover (25) consists of a stiff transparent layer of for instance PET and a soft, scratch resistive upper layer of for instance silicone. Such a screen cover (25) has excellent transparency compared with screen cover (25)s with resistive touch screen functionality. The inherit properties such as high brilliance, high luminance, good side visibility and low distortion leads to considerably lower power consumption, less battery capacity need and less voluminous design requirements.

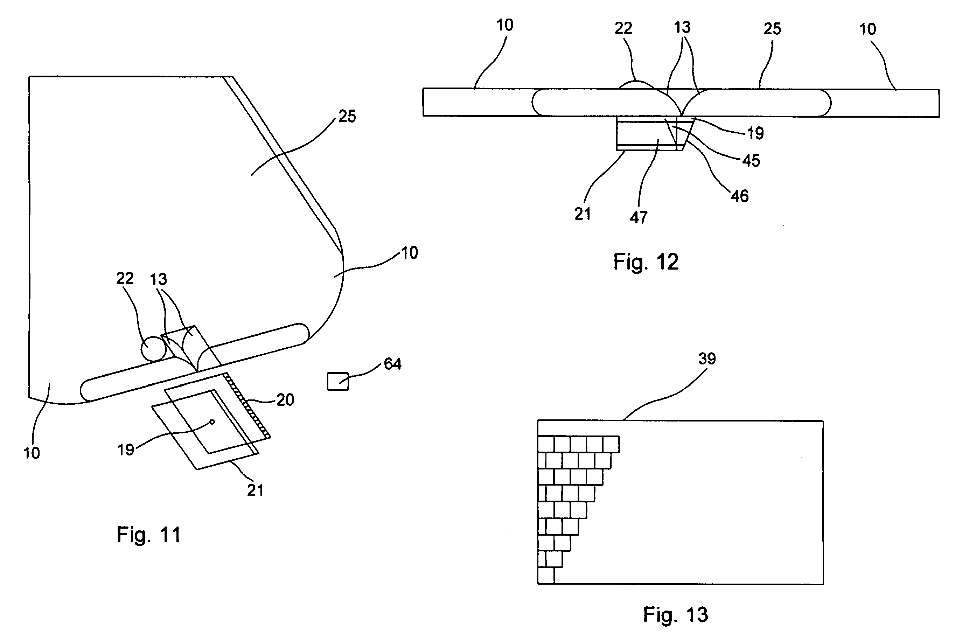

One primary concave mirror (10) - see Fig. 11 - is placed in each side of the screen to project incoming light from a wide angle of the screen to a left and a right secondary concave mirror (13) that project the light against desired areas of for instance a CCD. The primary concave mirrors in each side are also concave mirrors in the vertical plane in order to reflect the incoming light towards the secondary concave mirrors (13) in minimized angles. The primary concave mirrors (10) focus the light and act as a light signal amplifier as well as 2D to a 1 D reduction system, which only need a small elongated area out of for instance one CCD.

Mirrors are coated with a selectively IR mirroring layer and lenses (27, 28, 29) to see out of the internal screen is coloured so only the desired IR wavelengths pass through.

The screen cover (25) underside is coated with a selective IR mirroring layer in order to avoid any undesired optical effects due to optical contact between screen cover (25) and screen.

Under the two secondary concave mirrors (13) that project the light to the CCD the screen cover (25) is not coated with an IR mirroring layer.

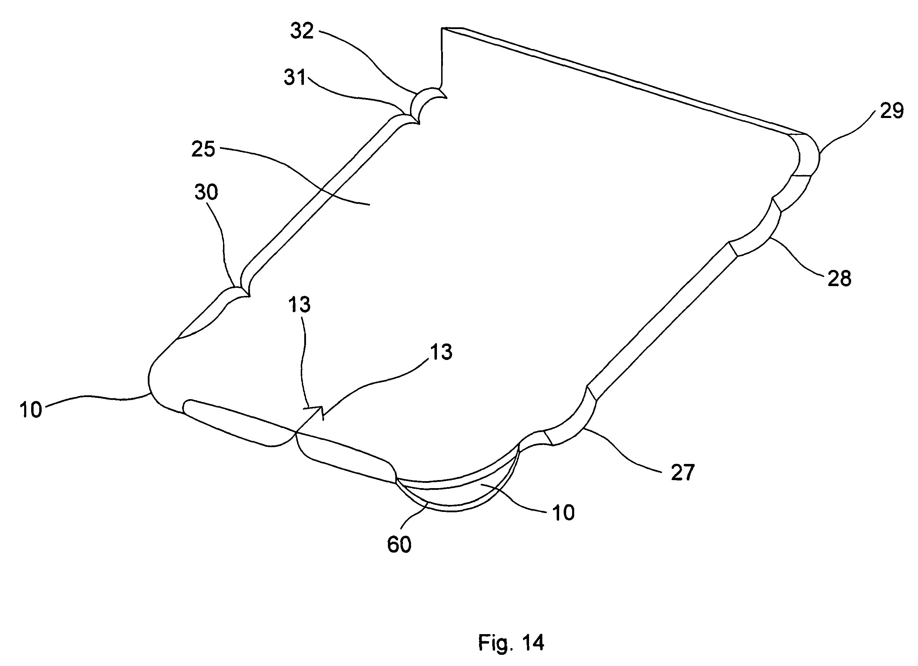

The screen cover (25) can be produced in a single mould with a double moulding process where the first hard plastic with all the optics is produced in the first process and the softer upper layer is produced in the last process. The screen cover (25) edges have angles that let light pass out and is coated with an absorbing layer except where there is placed mirrors (30,31,32) - see Fig. 14 - and lenses (27,28,29), which transmit light in the optic system.

### Apertures for triangulation and aperture for camera functionality

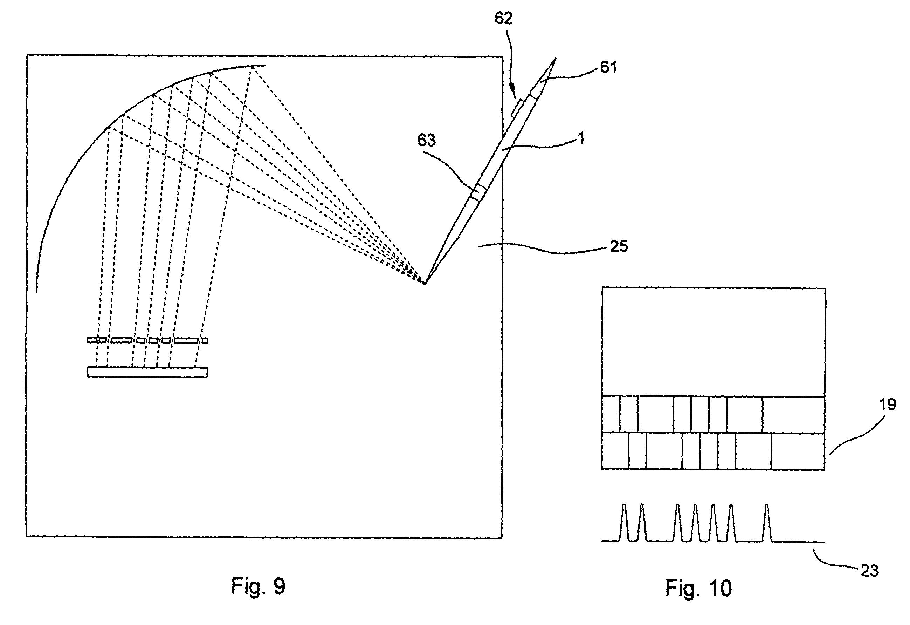

A thin film (19) - see Figs. 9-10 - with at least one row of apertures in a recognizable "barcode" like pattern (20) for both left and right canal and one aperture for the camera functionality is placed beneath the secondary concave mirrors. Each aperture creates a picture of the light that enters from the screen cover (25). Since we are looking at dots (23) there are no problems with multiple exposures and each aperture add a viewing angle and thus increase the achievable resolution.

The apertures are slightly tilted so the light passing through them will be received by different rows of the CCD slightly dislocated. This dislocation creates a better signal for triangulation. Each row is analysed separately because the pattern is slightly different from the pattern of the row beneath and the row above. During the analysis the software will find the extension of the light intensity distribution on the CCD by finding the first dark pixel on each side and also by finding the pixel with peak intensity. Then the software will compare all the rows to find the row with the highest peak intensity and to find the exact extension of the light intensity distribution by finding the darkest pixels close to the light intensity distribution. This enables the software to create a precise image of the light intensity distribution including peak and extension. This is done for every light extension distribution behind every aperture in every row exposed to incoming light from the transmissive layer (25, 26). A large/medium/small extension of the light intensity distribution correspond to a large/medium/small contact area and or the indent made by a stylus with an internal light emitter or a stylus with no internal light emitter depressing of the soft upper layer (26). A highest peak correspond to the centre of a contact area.

Under the thin film (19) with apertures three separate transparent spacing pieces (45,46,47) for right and left canal plus camera are placed. The CCD is glued to the spacing pieces (45,46,47) - see Fig. 11 - with for instance silicone for optimum stability, vibration protection and optical contact with minimum light information losses.

A camera lens (22) in for instance silicone with an IR reflective coating underneath is glued on top of the screen cover (25) above the camera aperture and the CCD (21) to allow the CCD to both detect light for a digital triangulation of position and to detect light to create digital pictures.

### Passive internal touch screen

In the edge of the screen cover (25) - see Figs. 1-3 - opposite the CCD, light moving in near straight angle is send into the upper soft screen cover (26) layer via a lens. A slight difference in the refractive index creates a small Brewster angle between the two layers. Any depression of the upper soft layer by any object such as a finger, a pen etc. will create an indent that mirror light beams down wards and all light beams that do not exceed the Brewster angle between the screen cover (25, 26) and air will stay trapped in the screen cover (25, 26) and thus be transmitted to the CCD enabling the software to do triangulation. The light has an alternative colour corresponding with selective filters that allow this colour exclusively to pass apertures for this particular function.

### Passive external 2D touch screen

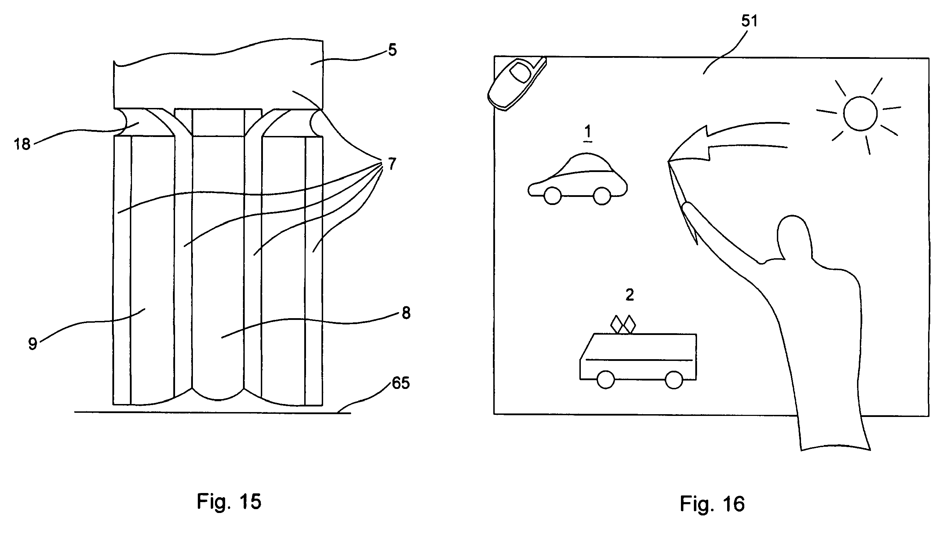

Two wide-angle lenses (27,28) - see Fig. 14 - are placed in the edge of the internal screen cover (25) and two concave mirrors (30,31) are placed in the opposite side to project incoming light from the wide-angle lenses. The concave mirror (31) furthest from the CCD project the light from the furthest lens (28) via a special primary concave mirror (60), below or above the ordinary primary concave mirror (10) and then to the secondary (13) and through the thin film with aperture (19) to the CCD. The special primary concave mirror (60) is coated to reflect only light in wavelengths coming from external signal providers and the rows of the CCD, which detect the light from external signal providers are have filters, that only accept light with wavelength similar to the external signal providers. The concave mirror closest (30) to the CCD project the light from the nearest wide-angle lens (27) directly to the closest secondary concave mirror (10) and through the thin film with apertures (19) to the CCD. The optics for the canals is adjusted to cover a desired external angle of for instance 90 degrees establishing an external touch screen, that can be employed close range for hand writing (52) or at a white board size touch screen (51) - see Fig. 16.

### Active external 2D touch screen

An external touch screen becomes active if an active screen is front or back projected to for instance a white board or a table - see Fig. 16. In order to use an active external 2D touch screen with accuracy a calibration procedure must be employed to establish the correct position of the projected screen relative to the position of the device with built in external touch screen facility. Letting the screen project points and then have the user touch the points with an active pen (1) allows the software to triangulate the pen touching the points and to calculate the relative position. Built in mobile telecommunication or close range transmission technologies allow users to share images and information drawn and projected on active external 2D touch screen. The sharing process can involve any wire less LAN technology such as Bluetooth, IRDA, Intranet, Internet and so on.

### External 3D touch screen

3D information can be added to the triangulation process by placing a third wide-angle lens at a place where the screen cover (25) is bending 90 degrees - see Fig. 14. The incoming light from the 3D wide-angle lens (32) is transmitted to the CCD in the same way as the furthest 2D wide-angle lens (31).

### Custom defined, chosen or designed icons

For both passive and active external touch screens users can place either visible or invisible icons in positions that when touched can command the execution of desired functions just like a traditional digitiser or mouse. Fixed icons can be placed at a table to ease commands for a desktop or a lap top computer. Fixed icons could be for instance a standard qwerty keyboard or any other preferred customised keyboard. Any digitiser icons can be printed and associated with the proper commands by establishing their position in relation to the device with an external touch screen.

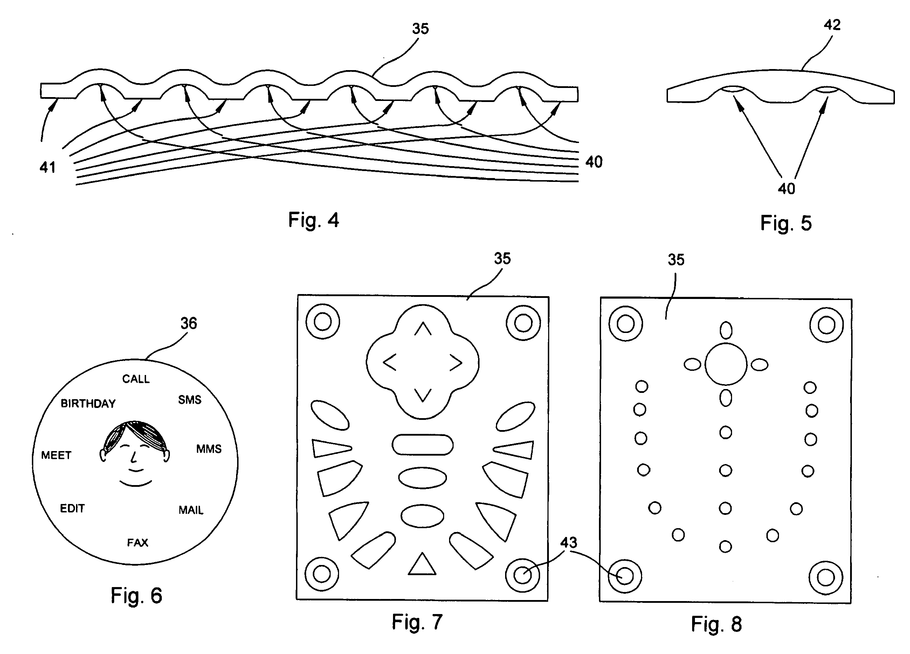

An icon can for instance be a portrait that appears when a contact in the phone book is high lighted. This "contact" icon (36) - see Fig. 6 - is a circle where usual contact related information is placed clockwise and command likewise so a simple dot with the pen can call, SMS, MMS, mail, fax etc. a person. Icons can have outer rings with more command structures.

### Keyboard, scroll and joystick

A Keyboard (35) - see Figs. 4-8 - can be moulded in a soft, tough, responsive and transparent material such as silicone or polyurethane. The Keyboard is mounted with suction pads upon the touch screen. IR light is send into the keyboard directly through the screen cover (25) into one of the suction pads (43). The keyboard is moulded with light diffusing particles. A partial covering IR mirror layer (41) disconnect the keyboard optically from the screen cover (25). Each button is slightly above the screen cover (25) and has a point (40) that can be connected optically to the screen cover (25) by pressing it down. The incoming light will be detected and triangulated. Placing contact points (40) around for instance a rounded shape makes joystick and scroll functions. When the user press or pull a contact point (40) comes into contact and send a signal. The buttons optical contact point is made in a 3D design that ensures that increased pressure will enlarge the contact area or shape it in a particular form. This is detected and analysed as a responsive signal that can be associated with distinctive commands depending of the shape. The design allows for customisation of users products by choosing flip over Keyboard and screen created graphics beneath the buttons as accessories. The Keyboard design allows for tactile features that can help persons with poor eyesight as well as anybody else to use their electronic products better. Icons according to the producers or the individual user wishes can be mounted beneath the Keyboard in areas where there is no active screen beneath the touch screen.

A touchy feely flip over Keyboard combined with software and audio and/or visual feed back can create an interface with a suitable dialog structure for diverse machines and products where it is important not to depend on direct visual control. Such a touchy feely interface could control for instance peripheral functions in a car such as temperature, humidity, radio, cd or MP3-player, mirror positions, light etc.

### Pen for active input to internal touch screen

The pen (1) for active input to internal touch screen is made with an internal light source and the pen point is chemically coated to bind one molecule thick layer of water in order to increase the optical contact and to ensure pleasant super low friction use. The pen point is completely rounded to ensure the same contact area no matter which angle the users choose to tilt his or hers pen. A pen touching the soft upper layer (26) of the internal touch screen will create a small indent (15) that acts like a wide-angle lens and increase the entrapment of incoming light in the screen cover (25, 26).

This pen has a light emitter 63, the wavelength and/or intensity of which is controlled by a controller 61 activated by a button 62.

### Pen for input to external touch screens

An ordinary pen or a white board marker has a built in pressure sensitive contact that activates a built in IR light source when the pen or marker is pressed against a writing surface so light is emitted to be detected by the wide-angle lenses (27,28) and triangulated by the software.

Naturally, this pen may also have the ability to vary its intensity/wavelength as is described above.

### Pen for barcode reading

A pen point to scan barcodes (5) - see Fig. 15 - consist of a co-axial pipe divided in a central light emitting pipe (8), that via a light conduction is connected to an IR light source, a light shielding pipe (7), a light conducting pipe with light diffusing properties (9) and a light shielding pipe (7) with a stripped light ring (18) that permit the light diffusing pipe to be seen by the wide-angle lenses (27,28). The barcode reader rest on its outer pipe while the user scans the pen upright over a barcode. The light coloured intersections of the barcode reflect light beams into the diffusing pipe and the ring of light is detected via the wide-angle lenses. The shadow/light signal is correlated with the triangulated position enabling the software to read the barcode properly because both speed and dark light reflections can be analysed. The user points out the corners of the barcode before scanning them in order to enhance the bar code reading accuracy. This enables the software to determine the direction and speed of the bar code reader pen relative to the barcode.

### Ordering goods and information with O-pen technology

Each spot of an object with unique bar code identification is assigned to contain information. Upon reading a unique bar code identification within an external touch screen the user will be prompted to answer whether or not to access a homepage corresponding to the bar code. Upon user acceptance to access the homepage the bar code assigned information is retrieved to the device and the following procedures are carried out. (can be done online as well.) The user marks the corners of the object with unique bar code identification by pointing a pen within an external touch screen. Now the device contains information assigned to any particular position and the relative position of any particular position. The user can now point out any position to access information or commands assigned to this particular position. As an example, a picture of a woman in a car driving past a hotel can contain information about the car, the woman dress, the hotel and how to purchase either of them. Any object such as goods, papers and magazines etc. can contain unlimited information that can be retrieved from the Internet in this way. User manuals, origins, advanced details concerning logistics, cooling chain information, health warnings, legal notice, test schemes, list of content, price, warranty etc. can be part of the information. The user can beforehand access their own personal homepage and enter any settings they want retrieved information to be matched to. The settings could for instance involve personal preferences of purchase including for instance body measurements, allergic risk assessment, diets, financial status, shopping lists, gift list, information needs in respect to different interest and so on. All information on goods and information of choice can be stored in a virtual shopping cart and retrieved when it is convenient for the user to make decisions of purchase. A part of the personal settings can involve software agent that automatically search the Internet for cheaper similar product offers. The user can in this way systemise purchase and information gathering in order to gain savings and increased quality.

### Unique identification of active signal providers

All active signal providers have unique identification in the form of a repeated particular amplitude pattern (37), which can be recognised by the software. This can be useful when a number of people are working together on the same screen or there is a need for differentiating between colours or other signal provider specific elements. A device only grants access to users according to the principal user's settings of user access depending on specific active signal providers with unique identification.

### Calibration of active signal providers

A factory calibration is done once and for all by applying gradually harder pressure to a point in contact with all points of an O-pen touch screen. The pressure will increase the size of the area in optical contact with the touch screen and/or alter the contact areas shape. The software will then store information about the shape depending on applied pressure and become able to identify the pressure. This enables the software to represent all active signal providers in a responsive manner. The software can furthermore have built in simulations of particular writing tools such as various brushes pens etc.

### Responsive accuracy can ensure higher quality digital signature

High quality measurement of handwriting including the particular pen point speed variations and the pressure variations plus the unique amplitude pattern (37) identification of signal providers enhance the credibility of a digital signature performed by the user every time an action needs a signed confirmation. The digital signature security is greatly increased because the device with O-pen touch screen, the signal provider, the address, the person and the signature plus possible a picture taken by the built in camera all can be confirmed. Devices with O-pen technology will be able to function as extra secure credit cards both in normal purchase situations and when the user purchase goods and information over the net.

The overall operation of this feature is a combination of the above-mentioned broadening of the stylus tip with increased pressure thereon while signing. Thus, a correlation of not only the positions (the actual signature) but also the velocity at given positions and the pressure exerted at positions may be used for further ensuring the identity of the signor.

### Calibration of touch screens

A simple figure with a well-known form is placed on the touch screen and the adequate pen is used to outline the figure. If the software triangulates an outline image, which correlate with the figure then the touch screen is accurate. If not then the software can reset the angles and in this way compensate for in precise optics. Given that the production accuracy is high enough the calibration can be done once and for all in the production process.

### Alternative to soft keyboard, scroll and joystick

Instead of a soft all in one piece keyboard a keyboard can be moulded of hard plastic parts with small contact areas suited to create small indents in an upper soft layer (26) that will cause light beams to be reflected up and down to the CCD through the lower hard part and the upper soft part of a transmissive layer (25, 26). The keyboard has a rigid supportive structure that spreads out pressure over a larger area of the upper part of the transmissive layer (26) in order to prevent incidental indents and consequently noise creation in the form of up and down reflecting light beams to occur. The individual keys are supported by the supportive structure and only the individual keys contact area can be pressed through holes in the supportive structure into the upper soft layer (26) of the transmissive layer. Scroll and joystick keys are fitted to the supportive structure with elastic glue such as silicone. When the user press the outer perimeter of a scroll button one or more contact areas create detectable indents in the upper soft part (26) of the transmissive layer. The contact areas can be formed so an increased pressure will enlarge the indent enabling the touch pad and software to detect a responsive signal. Adding a central stick to a scroll button that can be pulled instead of pressed makes a joystick.

### Alternative identification of active signal providers

A number of different pens can be employed simultaneous if a colour CCD is used or if the optical system separate colours with colour mirrors or filters. The emitted light from each pen will then have a unique colour that can be separated form the others by the software.

### Alternative holographic optics

The entire optic system can be produced in a holographic production process. This will decrease production variations and thus increase accuracy. In very complex variations it will also become an economic advantage.

### Alternative pen point design

Alternative to a hard pen with a rounded point a soft pen point can be employed to increase the contact area. This is beneficial especially in connection with hard surfaces. A pen with a feather load relief of excessive pressure can reduce stress on the surface and pen point.

### Alternative to active signal providers

Internal light emitters can be fitted in the device instead of in the active signal providers. Combined with pens that are coated with a reflective layer, this will enable use of inactive pens with no internal light emitter. The emitted light is preferably concentrated close to the surface and the pens are only reflective in an area at or very close to the pen point. The reflective pens (3) can be produced at virtually no cost at all or even be just a pen point cover. Alternatively an ambient collecting pen (4) made of a transparent material can collect light and send it into the screen cover (25).

Alternatively the pen can emit light in the form of heat that is charged to the pen through for instance microwave or friction or induction or a built in radioactive heating.

### Alternative mounts of Keyboard

The Flip over Keyboard (35) can be mounted by push buttons or slide into holders or be produced as a strap on solution or glued on or welded on or screwed on.

### Alternative to concave primary mirrors

Convex primary mirrors (11) can reflect light but not with amplification.

The aperture or the apertures (19) can be placed in front of a primary mirror (10).

The aperture or the apertures (19) and mirrors (10,13) can be combined with lenses.

One wide-angle lens can be placed in front of one or more apertures. Through this lens light directly from the pen point and light reflected from internal screen edges with colour selective mirrors that divide the light from the pen into two separate colours is projected to the image sensor. This will project at least three clearly defined dots on the image sensor enabling the software to do an accurate triangulation.

Employment of more lenses on top of each other with a slight disposition can enhance the resolution. So can employment of more lenses with one or more aperture that only covers a smaller angle of the entire screen.

### Alternative to concave secondary mirrors

Instead of secondary mirrors an optical taper (57) placed after the apertures (19) can concentrate the light on a small part of the image sensor.

### Partial amplification of touch screen resolution

A primary concave mirror (10) with a flatter or more curved form in particular parts can create an angle-differentiated resolution that can compensate for lowered resolution in for instance distant corners etc.

### Alternative to multiple apertures

Partial monochrome image sensor can enhance the resolution because there are four times as many pixels as compared with colour image sensors.

Instead of multiple apertures or in combination with multiple apertures the image sensor can have rows of pixels that are slightly dislocated (39). The dislocation could be for instance 1/10 of a pixel width. This will create a slight differentiation between each row and thus increase resolution.

Multiple apertures can be colour separated and match a particular colour filter in front of a row of the image sensor. This can be combined with colour selective reflective sides of an internal touch screen produce an increased resolution.

### Alternative to bar code reader

The built in camera or a connected camera or a wireless camera can be used photograph an unique code consisting of a micro pattern, which can be invisible to the human eye. The invisibility can be achieved by printing the pattern with ink that is only visible outside the visible light wavelength spectre for humans or by incorporating the pattern into raster. Invisibility enhance the visual design opportunities and the code can still be detectable either by scanning for it with the camera or by establishing a standard right upper corner position for instance.

### Image sensor with no 2D to 1 D reduction

A lens cap can ensure that the image sensor only receive light input from the pen point. An IR light filter ensures that light from the touch screen won't interfere with the camera image when the touch screen is not used. A more advanced lens cap can be made by involving a camera shutter that can close the light from the photographic lens allowing the image sensor to take pictures alternatively in between updating position.

## Claims

1. A touch pad having:
- a light transmissive means (25) having a first surface adapted to receive light;
the transmissive means (25) being adapted to transmit received light inside the light transmissive means (25) along the first surface,
- a first and a second means (21) adapted to receive light received by the surface, transmitted along the first surface by the transmissive means (25),
and for outputting corresponding signals, the receiving means (21) comprising two detectors (21) for detecting light received at at least two different areas or points, and
- means for determining, on the basis of signals from the receiving means (21),
a position of the first surface having received light,
**characterized in that** the detectors (21) are adapted to determine an angle of incidence of detected light at each area or point, each detector (21) being an at least one-dimensional detector (21) having a number of detecting points or areas and being positioned so that light from two different points on the first surface are detected at different points/areas of at least one of the detectors (21).

2. A touch pad according to claim 1, further comprising a display or monitor (65), the monitor or display (65) being positioned so as to provide or display information through the first surface of the light transmissive means (25).

3. A touch pad according to any of the preceding claims, wherein the light transmissive means (25) comprises an at least substantially flat light transmissive member having at a surface thereof a light transmissive coating or layer (26), an upper surface of which forms the first surface of the light transmissive means (25).

4. A touch pad according to claim 3, wherein the member comprises a light transmissive display or monitor (65).

5. A touch pad according to any of the preceding claims, further comprising a flexible element (35) positioned at or on the first surface and a light emitter adapted to transmit light into the flexible element (35), the element (35) being adapted to have a part (40) thereof depressed toward the first surface and to direct light from the flexible element (35) into the member at the depressed part (40).

6. A touch pad according to claim 5, wherein the flexible element (35) has a first side comprising a number of predetermined first areas adapted to be depressed toward the first surface and a second side having, at areas opposite to the predetermined first areas, second areas (40) which, in a first, non-depressed position, have a distance to the first surface and, in a second, depressed position, abut the first surface.

7. A touch pad according to claim 6, wherein the flexible element (35) has, between the second areas, means (41) for preventing transmission of light from the flexible element (35) to the first surface.

8. A touch pad according to claim 5, further comprising a depressing means having a first side comprising a number of predetermined first areas adapted to be depressed toward the first surface and a second side having, at areas opposite to the predetermined first areas, depression elements (40) which, in a first, non-depressed position, do not to any substantial degree depress the flexible member (35) and, in a second, depressed position, depress the flexible member (35).

9. A touch pad according to claim 8, wherein the depressing means comprises an at least substantially stiff member being rotatable in relation to a remaining part of the depressing means, the stiff member having, at its first side, a plurality of the first areas and, at its second side, a plurality of the depression elements.

10. A touch pad according to any of the preceding claims, further comprising an element (35) having a first side having a number of first predetermined positions for engagement of a user and a second side having a number of second positions or areas (40) corresponding to the first positions, the element (35) being adapted to, when a first position is engaged by the user, emit light from the corresponding second position (40), the second side being positioned so that the light emitted may be received by the first surface.

11. A touch pad according to any of the preceding claims, wherein the detecting means (21) comprise, for each area or point, a reflecting means or lens means (10,13,27,28,29,30,31,32,60) for directing the light received at the area or point on to the detectors (21).

12. A touch pad according to any of the preceding claims, wherein the receiving means : (21) comprise means for detecting light emitted at a predetermined point of the first surface in two different directions and means for determining the position of the predetermined point from the directions in which the light was detected.

13. A touch pad according to claim 12, wherein the detecting means (21) comprise reflecting means or lens means (10,13,27,28,29,30,31,32,60) for directing the light emitted in the two different directions on to the detectors (21).

14. A touch pad according to any of the preceding claims, further comprising a plurality of slots or apertures provided between the predetermined point at the first surface and the one-dimensional detectors (21), the detecting points/areas of the one-dimensional detectors (21) being at least substantially equidistant, and a distance between two adjacent slots being different from a multiple of a distance between two adjacent areas/points of a detector (21).

15. A touch pad according to any of the preceding claims, wherein the detectors (21) comprise a CCD detector (21).

16. A touch pad according to claim 15, wherein the CCD detector (21) is a two-dimensional detector having a number of rows of detecting points/areas, and wherein each detector (21) comprises at least one row of the CCD detector (21).

17. A touch pad according to claim 16, further comprising means (27,28,29) for directing light from surroundings of the touch pad to one or more other rows of the CCD detector (21).

18. A touch pad according to any of the preceding claims, wherein a filter means or the reflecting/lens means (10,13,27,28,29,30,31,32,60) is adapted to transmit at least substantially only light within a predetermined wavelength interval.

19. A touch pad according to any of the preceding claims, the pad further comprising a stylus or pen (1) adapted to emit light from a point thereof, the stylus or pen (1) being adapted to transmit light into the light transmissive means (25) when touching and/or being translated over the first surface.

20. A touch pad according to any of the preceding claims, further comprising means (27, 28) for receiving light from outside the pad and in a plane at least substantially parallel to the first surface and for transporting the light into the light transmissive means (25), the determining means being adapted to determine a position outside the pad from which the light is emitted.

21. A touch pad according to claim 20, wherein the receiving means comprise at least two lens means or mirror means. (27,28) positioned so as to direct light from the outside of the pad along the plane into the light transmissive means (25).

22. A touch pad according to claim 21, wherein the lens or mirror means (27,28,29) form part of the light transmissive means (25).

23. A touch pad according to claim 21 or 22, further comprising means for directing light transported into the light transmissive means by the transporting means to the determining means.

24. A touch pad according to any of the preceding claims, further comprising a stylus or pen (1) having:
- a first light transmitting channel (8) along a predetermined axis of the stylus or pen (1),
- means for providing light into and along the transmitting channel (8),
- means for outputting the light from the transmitting channel (8),
- a receiving channel (9) being adapted to receive light output from the transmitting channel (8) and having been reflected outside the pen or stylus (1), and
- means (18) for directing light from the receiving channel (9) toward the receiving means (27,28,29) of the pad.

25. A method of operating a touch pad, the method comprising:
- providing a light transmissive means (25) having a first surface adapted to receive light,
- providing a first and a second means (21) comprising at least two detectors (21), each detector (21) being an at least one-dimensional detector (21) having a number of detecting points or areas,
- receiving light at the first surface,
- transmitting the received light inside the light transmissive means (25) along the first surface,
- detecting the transmitted light by the first and a second means (21),
- outputting, from the first and second means (21), corresponding signals, and
- determining, on the basis of signals from the receiving means (21), a position of the first surface having received light,
**characterized in that** the detecting step comprises detecting light received at at least two different areas or points, the determining step comprising determining an angle of incidence of detected light at each area or point,
the method further comprising the step of detecting light emitted from two different points on the first surface at different points/areas of at least one of the detectors (21).

26. A method according to claim 25, further comprising providing or displaying information through the first surface of the light transmissive means by/from a display or monitor (65).

27. A method according to any of claims 25 or 26, wherein the comprising step comprises providing a light transmissive means (25) comprising an at least substantially flat light transmissive member having at a surface thereof a light transmissive coating or layer, an upper surface of which forms the first surface of the light transmissive means.

28. A method according to claim 27, wherein the providing step comprises providing a member comprising a light transmissive display or monitor (65).

29. A method according to any of claims 25-28, the touch pad further comprising a flexible element (35) positioned at or on the first surface and a light emitter, the light emitter transmitting light into the flexible element (35), the method comprising the step of depressing a part (40) of the element toward the first surface and directing light from the flexible element (35) into the member at the depressed part(40).

30. A method according to claim 29, wherein the flexible element (35) has a first side comprising a number of predetermined first areas adapted to be depressed toward the first surface and a second side having, at areas opposite to the predetermined first areas, second areas (40), the method comprising depressing one or more of the first areas and bringing the one or more corresponding second areas (40) from a first, non-depressed position in which the corresponding second area(s) (40) have a distance to the first surface into a second, depressed position, where the corresponding second area(s) (40) abut the first surface.

31. A method according to claim 30, further comprising the step of preventing transmission of light from the flexible element to the first surface between the second areas.

32. A method according to claim 29, wherein the touch pad comprises a depressing means having a first side comprising a number of predetermined first areas adapted to be depressed toward the first surface and a second side having, at areas opposite to the predetermined first areas, depression elements (40), the method comprising depressing one or more of the first areas of the depressing means so as to bring one or more of the corresponding depression elements (40) from a first, non-depressed position in which they do not to any substantial degree depress the flexible member (35) to a second, depressed position in which they depress the flexible member (35).

33. A method according to claim 32, wherein the depressing means comprises an at least substantially stiff member having, at its first side, a plurality of the first areas and, at its second side, a plurality of the depression elements, the method comprising rotating the stiff member in relation to a remaining part of the depressing means so as to bring one or more second areas from the first to the second positions.

34. A method according to any of claims 25-33, the touch pad further comprising an element (35) having a first side having a number of first predetermined positions for engagement of a user and a second side having a number of second positions or areas (40) corresponding to the first positions, the method comprising the step of, when a first position is engaged by the user, emitting fight from the corresponding second position (40) and receiving the emitted light by the first surface.

35. A method according to any of the claims 25-34, comprising the step of directing, using a reflecting means or lens means (10,13,27,28,29,30,31,32,60), the light received at the area or point on to the detectors (21).

36. A method according to any of claims 25-35, wherein the detecting and determining steps comprise detecting light emitted at a predetermined point of the first surface in two different directions and determining the position of the predetermined point from the directions in which the light was detected.

37. A method according to claim 36, comprising directing, using reflecting means or lens means (10,13,27,28,29,30,31,32,60), the light emitted in the two different directions on to the detectors (21).

38. A method according to any of the claims 25-37, further comprising the step of providing a plurality of slots between the predetermined point at the first surface and the one-dimensional detectors (21), the detecting points/areas of the one-dimensional detectors (21) being at least substantially equidistant, and a distance between two adjacent slots being different from a multiple of a distance between two adjacent areas/points of a detector (21).

39. A method according to any of claims 25-38, the touch pad comprising a two-dimensional CCD detector (21) having a number of rows of detecting points/areas, wherein the detecting step comprises detecting light transmitted by the transmissive means by one or more of the rows of detecting points/elements.

40. A method according to claim 39, the method further comprising the step of directing light from surroundings of the touch pad to one or more other rows of the CCD detector (21).

41. A method according to any of claims 39-40, further comprising the step of transmitting at least substantially only light within a predetermined wavelength interval.

42. A method according to any of claims 25-41, wherein the step of providing the light comprises providing a stylus or pen (1) emitting light from a point thereof and transmitting light into the light transmissive means (25) when touching and/or being translated over the first surface.

43. A method according to any of claims 25-42, further comprising the steps of:
- receiving light from outside the pad and in a plane at least substantially parallel to the first surface and
- transporting the light into the light transmissive means,
the determining step comprising determining a position outside the pad from which the light is emitted.

44. A method according to claim 43, further comprising providing at least two lens means or mirror means (27,28) positioned so as to direct light from the outside of the pad along the plane into the light transmissive means (25).

45. A method according to claim 44, wherein the steps of providing the light transmissive means (25) and the lens or mirror means (27,28) comprises providing the light transmissive means (25) and the lens/mirror means (27,28) as a single element.

46. A method according to claim 44 or 45, further comprising the step of directing light transported into the light transmissive means (25) by the transporting means to the determining means.

47. A method according to claim 43, the method comprising translating a stylus or pen (1) having:
- a first light transmitting channel (8) along a predetermined axis of the stylus or pen (1),
- means for providing light into and along the transmitting channel (8),
- means for outputting the light from the transmitting channel (8),
- a receiving channel (9) being adapted to receive light output from the transmitting channel (8) and having been reflected outside the pen or stylus (1),
- means for directing light from the receiving channel (9) toward the receiving means (27,28,29) of the pad
over a surface having areas of varying light reflection, the light or stylus (1) directing light of varying intensity toward the touch pad,
wherein the determining step comprises determining information from the variation in the light intensity.

48. A method according to any of claims 25-47, the method comprising providing light at the first surface using a stylus or pen (1), the method further comprising the step of varying an intensity and/or wavelength of the light emitted, the variation being controlled by a controlling means (62) controllable by a user, and wherein the determining step comprises detecting the variation.

49. A method according to claim 48, wherein the varying step comprises the user depressing an area (62) of the stylus (1), the depression facilitating the variation of the intensity and/or wavelength.

## Patentansprüche

1. Berührungs-Pad mit
- lichtdurchlässigen Mitteln (25) mit einer ersten Oberfläche, die angepasst ist, Licht zu empfangen, wobei die Übertragungsmittel (25) angepasst sind, um empfangenes Licht innerhalb der lichtdurchlässigen Mittel (25) entlang der ersten Oberfläche zu übertragen,
- erste und zweite Mittel (21), die zum Empfang von Licht angepasst sind, das von der Oberfläche empfangen wurde und entlang der ersten Oberfläche durch die durchlässigen Mittel (25) übertragen wird, und zum Ausgeben von korrespondierenden Signalen, wobei die Empfangsmittel (21) zwei Detektoren (21) zur Detektion von Licht umfassen, das an mindestens zwei Bereichen oder Punkten empfangen wurde, und
- Mitteln zur Feststellung einer Position auf der ersten Oberfläche, die Licht empfangen hat, basierend auf Signalen der Empfangsmittel (21)
**dadurch gekennzeichnet, dass**
die Detektoren (21) angepasst sind, einen Einfallswinkel des detektierten Lichtes in jedem Bereich oder Punkt festzustellen, wobei jeder Detektor (21) ein mindestens eindimensionaler Detektor (21) ist, der eine Anzahl von Detektionspunkten oder -bereichen aufweist, und der derart positioniert ist, dass Licht von zwei unterschiedlichen Punkten auf der ersten Oberfläche an unterschiedlichen Punkten/Bereichen von mindestens einem der Detektoren (21) detektiert wird.

2. Berührungs-Pad nach Anspruch 1, weiterhin umfassend eine Anzeige oder Monitor (65), wobei der Monitor oder die Anzeige (65) so positioniert ist, dass Informationen durch die erste Oberfläche der lichtdurchlässigen Mittel (25) hindurch geliefert oder angezeigt werden.

3. Berührungs-Pad nach einem der vorangehenden Ansprüche, wobei die lichtdurchlässigen Mittel (25) einen im Wesentlichen flachen, lichtdurchlässigen Teil umfassen, der auf dessen Oberfläche eine lichtdurchlässige Beschichtung oder Schicht (26) aufweist, wobei eine zugehörige obere Oberfläche die erste Oberfläche der lichtdurchlässigen Mittel (25) bildet.

4. Berührungs-Pad nach Anspruch 3, wobei der Teil eine/n lichtdurchlässige/n Anzeige oder Monitor umfasst.

5. Berührungs-Pad nach einem der vorangehenden Ansprüche, weiterhin umfassend: ein flexibles Element (35), das an oder auf der ersten Oberfläche positioniert ist, und einen Lichtemitter, der angepasst ist, um Licht in das flexibles Element (35) zu übertragen, wobei das Element (35) angepasst ist, um ein Bauteil (40) aufzuweisen, das in Richtung der ersten Oberfläche eingedrückt ist, und das Licht von dem flexiblen Element (35) in das Teil beim eingedrückten Bauteil (40) leitet.

6. Berührungs-Pad nach Anspruch 5, wobei das flexible Element (35) eine erste Seite aufweist, die eine Anzahl von vorher bestimmten ersten Bereichen umfasst, die angepasst sind, um in Richtung der ersten Oberfläche eingedrückt zu sein, und eine zweite Seite umfasst, die in Bereichen, die gegenüber den vorher bestimmten ersten Bereichen liegen, zweite Bereiche (40) aufweist, die in einer ersten, nicht eingedrückten Position einen Abstand zur ersten Oberfläche aufweisen und in einer zweiten, eingedrückten Position an die erste Oberfläche angrenzen.

7. Berührungs-Pad nach Anspruch 6, wobei das flexible Element (35) zwischen den zweiten Bereichen Mittel (41) zum Verhindern von Lichtübertragungen von dem flexiblen Element (35) zur ersten Oberfläche aufweist.

8. Berührungs-Pad nach Anspruch 5, weiterhin umfassend ein Eindrückmittel, das eine erste Seite, die ein Anzahl von vorher bestimmten ersten Bereichen aufweist, die angepasst sind, um in Richtung der ersten Oberfläche eingedrückt zu sein, und eine zweite Seite umfasst, die in Bereichen gegenüber den vorher bestimmten Bereichen Eindrückelemente (40) aufweist, welche in einer ersten nicht eingedrückten Position zu keinem Wesentlichen Grad das flexible Element (35) eindrücken und in einer zweiten, eingedrückten Position das flexible Element (35) eindrücken.

9. Berührungs-Pad nach Anspruch 8, wobei das Eindrückmittel mindestens ein im Wesentlichen steifes Teil umfasst, das hinsichtlich des restlichen Teils der Eindrückmittel rotierbar ist, wobei das steife Teil an seiner ersten Seite, eine Mehrzahl der ersten Bereiche und auf seiner zweiten Seite eine Mehrzahl der Eindrückelemente aufweist.

10. Berührungs-Pad nach einem der vorangehenden Ansprüche, weiterhin umfassend ein Element (35), mit einer ersten Seite, die eine Anzahl von ersten vorher bestimmten Positionen für ein Einwirken eines Nutzers aufweist, und einer zweiten Seite, die eine Anzahl von zweiten Positionen oder Bereichen (40) aufweist, die den ersten Positionen entsprechen, wobei das Element (35) angepasst ist, Licht von der korrespondierenden, zweiten Position (40) zu emittieren, wenn eine erste Position von einem Nutzer eingedrückt wird, wobei die zweite Seite so positioniert ist, dass das emittierte Licht von der ersten Seite empfangen werden kann.

11. Berührungs-Pad nach einem der vorangehenden Ansprüche, wobei die Detektionsmittel (21) für jeden Bereich oder Punkt Reflektionsmittel oder Linsenmittel (10, 13, 27, 28, 29, 30, 31, 32, 60) zum Lenken des empfangenen Lichtes auf die Detektoren (21) umfassen.

12. Berührungs-Pad nach einem der vorangehenden Ansprüche, wobei die Detektionsmittel Mittel zum Detektieren von Licht, das an einem vorher bestimmten Punkt der ersten Oberfläche in zwei unterschiedliche Richtungen emittiert wird, und Mittel zur Feststellung der Position des vorher bestimmten Punktes durch die Richtung, aus der das Licht detektiert wurde, umfassen.

13. Berührungs-Pad nach Anspruch 12, wobei die Detektionsmittel (21) reflektierende Mittel oder Linsenmittel (10, 13, 27, 28, 29, 30, 31, 32, 60) zum Lenken des in zwei Richtungen emittierten Lichtes auf die Detektoren (21) umfassen.

14. Berührungs-Pad nach einem der vorangehenden Ansprüche, weiterhin umfassend eine Mehrzahl von Schlitzen oder Öffnungen, die zwischen den vorher bestimmten Punkten auf der ersten Oberfläche und den eindimensionalen Detektoren (21) vorgesehen sind, wobei die Detektionspunkte / -bereiche der eindimensionalen Detektoren (21) mindestens im Wesentlichen äquidistant sind, und ein Abstand zwischen zwei benachbarten Schlitzen unterschiedlich ist zum Vielfachen eines Abstandes zwischen zwei benachbarten Bereichen/Punkten des Detektors (21).

15. Berührungs-Pad nach einem der vorangehenden Ansprüche, wobei die Detektoren (21) einen CCD-Detektoren (21) einschließen.

16. Berührungs-Pad nach Anspruch 15, wobei der CCD-Detektor (21) ein zweidimensionaler Detektor ist, der eine Anzahl von Reihen von Detektionspunkten/-bereichen aufweist, und wobei jeder Detektor (21) mindestens eine Reihe des CCD-Detektors (21) umfasst.

17. Berührungs-Pad nach Anspruch 16, weiterhin Mittel (27, 28, 29) zum Lenken von Umgebungslicht des Berührungs-Pad auf eine oder mehrere Reihen des CCD-Detektors (21) umfassend.

18. Berührungs-Pad nach einem der vorangehenden Ansprüche, wobei ein Filtermittel oder die Reflektions-/Linsenmittel (10, 13, 27, 28, 29, 30, 31, 32, 60) angepasst sind, um mindestens im Wesentlichen nur Licht innerhalb eines vorher bestimmten Wellenlängenintervalls zu übertragen.

19. Berührungs-Pad nach einem der vorangehenden Ansprüche, wobei das Pad weiterhin einen Stylus oder Stift (1) umfasst, der angepasst ist, Licht von einem zugehörigen Punkt zu emittieren, wobei der Stylus oder Stift (1) angepasst ist, um Licht in die lichtdurchlässigen Mittel (25) zu emittieren, wenn die erste Oberfläche berührt wird und/oder er über die erste Oberfläche geführt wird.

20. Berührungs-Pad nach einem der vorangehenden Ansprüche, weiterhin umfassend Mittel (27, 28) zum Empfangen von Licht von außerhalb des Pad und in einer mindestens im Wesentlichen zur ersten Oberfläche parallelen Ebene und zum Transport des Lichtes in die lichtdurchlässigen Mittel (25), wobei die Feststellmittel angepasst sind, eine Position außerhalb des Pad, von wo das Licht emittiert wird, festzustellen.

21. Berührungs-Pad nach Anspruch 20, wobei die Empfangsmittel mindestens zwei Linsen oder Spiegelmittel (27, 28) umfassen, die so positioniert sind, um Licht von außerhalb des Pad entlang der Ebene in die lichtdurchlässigen Mittel (25) zu lenken.

22. Berührungs-Pad nach Anspruch 21, wobei die Linsen oder Spiegelmittel (27, 28, 29) einen Teil der lichtdurchlässigen Mittel (25) bilden.

23. Berührungs-Pad nach Anspruch 21 oder 22, weiterhin umfassend Mittel zum Lenken von Licht, das durch die Transportmittel in die lichtdurchlässigen Mittel zu den bestimmenden Mitteln transportiert wird.

24. Berührungs-Pad nach einem der vorangehenden Ansprüche, weiterhin umfassend einen Stylus oder Stift (1), der Folgendes ausweist:
- einen ersten Licht übertragenden Kanal (8) entlang einer vorher bestimm ten Achse des Stylus oder Stiftes (1),
- Mittel zur Verfügungstellung von Licht in und entlang des übertragenden Kanals (8),
- Mittel zum Aussenden von Licht aus dem übertragenden Kanal (8),
- einen Empfangskanal (9), der angepasst ist, um Licht, das vom übertragen den Kanal (8) ausgesendet wird, das von außerhalb der Stiftes oder Stylus (1) reflektiert wird, zu empfangen, und
- Mittel (18) zum Lenken von Licht vom Empfangskanal (9) zu den Empfangsmitteln (27, 28, 29) des Pad.

25. Verfahren zum Betrieb eines Berührungs-Pad, umfassend:
- Bereitstellung von lichtdurchlässigen Mitteln (25), die eine erste Oberfläche aufweisen, die zum Empfang von Licht ausgebildet ist,
- Bereitstellung von einem ersten und einem zweiten Mittel (21), die mindestens zwei Detektoren (21) umfassen, wobei jeder Detektor (21) ein mindestens eindimensionaler Detektor (21) ist, der eine Anzahl von Detektionspunkten oder Bereichen aufweist,
- Empfangen von Licht auf der ersten Oberfläche,
- Übertragen des empfangenen Lichtes innerhalb der lichtdurchlässigen Mittel (25) entlang der ersten Oberfläche,
- Detektieren des übertragenen Lichtes durch die ersten und zweiten Mittel (21),
- Ausgeben von korrespondierenden Signalen von den ersten und zweiten Mitteln (21), und
- Feststellen einer Position der ersten Oberfläche, die Licht empfangen hat, basierend auf Signalen von den Empfangsmitteln (21),
**dadurch gekennzeichnet, dass**
der Detektionsschritt ein Detektieren von Licht, das an den mindestens zwei unterschiedlichen Bereichen oder Punkten empfangen wird, umfasst, wobei der Feststellschritt ein Feststellen eines Einfallswinkels von detektiertem Licht an jedem Bereich oder Punkt umfasst,
wobei des Verfahren weiterhin den Schritt des Detektierens von Licht, das von zwei unterschiedlichen Punkten auf der ersten Oberfläche an unterschiedlichen Punkten/Bereichen emittiert wird, durch mindestens einen der Detektoren (21) umfasst.

26. Berührungs-Pad nach Anspruch 25, weiterhin umfassend ein Bereitstellen oder eine Anzeige von Informationen durch die erste Oberfläche der lichtdurchlässigen Mittel durch/mit eine/r Anzeige oder einen/m Monitor (65).

27. Berührungs-Pad nach Anspruch 25 oder 26, wobei der enthaltene Schritt, ein Bereitstellen von lichtdurchlässigen Mitteln (25) umfasst, die ein mindestens im Wesentlichen flaches, lichtdurchlässiges Bauteil umfassen, das an einer zugehörigen Oberfläche eine lichtdurchlässige Beschichtung oder Schicht aufweist, wobei eine zugehörige obere Oberfläche die erste Oberfläche der lichtdurchlässigen Schicht bildet.

28. Verfahren nach Anspruch 27, wobei der Bereitstellungsschritt das Bereitstellen eines Teils umfasst, das eine/n lichtdurchlässige/n Anzeige oder Monitor enthält.

29. Verfahren nach einem der Ansprüche 25 bis 28, wobei das Berührungs-Pad weiterhin ein flexibles Element (35), das an oder auf der ersten Oberfläche positioniert ist, und einen Lichtemitter umfasst, wobei der Lichtemitter Licht in das flexible Element (35) überträgt, wobei das Verfahren den Schritt des Eindrückens eines Teils (40) des Elementes in Richtung der ersten Oberfläche und das Lenken von Licht von dem flexiblen Element (35) in das Teil am eingedrückten Bauteil umfasst.

30. Verfahren nach Anspruch 29, wobei das flexible Element (35) eine erste Seite, die eine Anzahl von vorher bestimmten ersten Bereichen umfasst, die angepasst sind, um in Richtung der ersten Oberfläche eingedrückt zu werden, und eine zweite Seite aufweist, die in Bereichen gegenüber den vorher bestimmten ersten Bereichen zweite Bereiche aufweist, wobei das Verfahren ein Eindrücken von einer oder mehreren der ersten Bereiche und das Verbringen der einen oder mehreren korrespondierenden, zweiten Bereiche aus einer ersten nicht eingedrückten Position, in der eine oder mehrere korrespondierende zweite Bereiche (40) einen Abstand zu der ersten Oberfläche aufweisen, in eine zweite, eingedrückte Position umfasst, wobei der/die korrespondierende(n) zweite(n) Bereich(e) (40) an die ersten Oberfläche angrenzt/en.

31. Verfahren nach Anspruch 30, weiterhin den Schritt des Verhinderns einer Lichtübertragung von dem flexiblen Element zur ersten Oberfläche zwischen den zweiten Bereichen umfassend.

32. Verfahren nach Anspruch 29, wobei das Berührungs-Pad ein Eindrückmittel umfasst, das eine erste Seite, die eine Anzahl von vorher bestimmten, ersten Bereichen umfasst, die angepasst sind, um in Richtung der ersten Oberfläche gedrückt zu werden, und eine zweite Seite aufweist, die in Bereichen gegenüber den ersten vorher bestimmten ersten Bereichen Eindrückelemente (40) aufweist, wobei das Verfahren das Eindrücken der einen oder mehreren ersten Bereiche der Eindrückmittel umfasst, so dass ein oder mehrere der korrespondierenden, eingedrückten Elemente (40) von einer ersten, nicht eingedrückten Position, in der sie nicht zu einem Wesentlichen Grad die flexiblen Elemente (35) eindrücken, in eine zweite, eingedrückte Position, in der sie die flexiblen Elemente (35) eindrücken, gebracht werden.

33. Verfahren nach Anspruch 32, wobei die Eindruckmittel ein mindestens im Wesentlichen steifes Teil umfassen, das auf seiner ersten Seite eine Mehrzahl von ersten Bereichen und auf seiner zweiten Seite eine Mehrzahl von Eindrückelementen aufweist, wobei das Verfahren ein Drehen des steifen Teils hinsichtlich eines übrigen Teils der Eindrückmittel umfasst, um so einen oder mehrere Bereiche von der ersten in die zweite Position zu verbringen.

34. Verfahren nach einem der Ansprüche 25 bis 33, wobei das Berührungs-Pad ein Element (35) umfasst, das eine erste Seite, welche eine Anzahl von ersten, vorher bestimmten Positionen für ein Einwirken eines Nutzers aufweist, und das eine zweite Seite aufweist, welche eine Anzahl von zweiten Positionen oder Bereichen (40), die den ersten Positionen entsprechen, aufweist, wobei das Verfahren den Schritt umfasst, bei dem, wenn auf eine erste Position durch den Nutzer eingewirkt wird, Licht von der korrespondierenden zweiten Position (40) emittiert wird, und das Licht von der ersten Oberfläche empfangen wird.

35. Verfahren nach einem der Ansprüche 25 bis 34, wobei der Schritt des Lenken des Lichtes umfasst ist, das im Bereich oder Punkt auf die Detektoren (21) empfangen wird, wobei reflektierende Mittel oder Linsenmittel (10, 13, 27, 28, 29, 30, 31, 32, 60) genutzt werden.

36. Verfahren nach einem der Ansprüche 25 bis 35, wobei die Detektions- und Bestimmungsschritte das Detektieren von Licht, das von einem vorher bestimmten Punkt auf der ersten Oberfläche in zwei unterschiedliche Richtungen emittiert wird, und das Bestimmen der Positionen des vorher bestimmten Punktes durch die Richtungen, aus denen das Licht detektiert wurde, umfassen.

37. Verfahren nach Anspruch 36, umfassend das Lenken des Lichtes, das in zwei unterschiedliche Richtungen auf die Detektoren (21) emittiert wird, wobei reflektierende Mittel oder Linsenmittel (10, 13, 27, 28, 29, 30, 31, 32, 60) genutzt werden.

38. Verfahren nach einem der Ansprüche 25 bis 37, weiterhin den Schritt des Bereitstellens einer Vielzahl von Schlitzen zwischen dem vorher bestimmten Punkt auf der ersten Oberfläche und den eindimensionalen Detektoren (21) umfassend, wobei die Detektionspunkte / -bereiche der eindimensionalen Detektoren (21) mindestens im Wesentlichen äquidistant sind, und ein Abstand zwischen zwei benachbarten Schlitzen sich von einem Vielfachen einer Distanz zwischen zwei benachbarten Bereichen/Punkten eines Detektors unterscheidet.

39. Verfahren nach einem der Ansprüche 25 bis 38, wobei das Berührungs-Pad einen zweidimensionalen CCD-Detektor (21) umfasst, welcher eine Anzahl von Reihen von Detektionspunkten / -bereichen aufweist, wobei der Detektionsschritt ein Detektieren von Licht, das von lichtdurchlässigen Mitteln durch eine oder mehrere der Reihe der Detektionspunkte/ -elemente übertragen wird, umfasst.

40. Verfahren nach Anspruch 39, wobei das Verfahren weiterhin den Schritt des Lenkens von Licht aus der Umgebung des Berührungs-Pad auf eine oder mehrere Reihen des CCD-Detektors (21) umfasst.

41. Verfahren nach einem der Ansprüche 39 bis 40, wobei weiterhin der Schritt des Übertragens von nur mindestens im Wesentlichen Licht innerhalb eines vorher bestimmten Wellenlängenintervalls umfasst ist.

42. Verfahren nach einem der Ansprüche 25 bis 41, wobei der Schritt des Bereitstellen des Lichtes ein Bereitstellen eines Stylus oder Stiftes (1) umfasst, welcher Licht von einem dazugehörigen Punkt emittiert, und eine Übertragung von Licht in die lichtdurchlässigen Mittel (25) umfasst, wenn der Stylus oder Stift die erste Oberfläche berührt und/oder über sie geführt wird.

43. Verfahren nach einem der Ansprüche 25 bis 42, weiterhin den folgenden Schritt umfassend:
Empfangen von Licht von außerhalb des Pad und in einer mindestens im Wesentlichen parallel zu ersten Oberfläche verlaufenden Ebene,
- Transportieren des Lichtes in die lichtdurchlässigen Mittel,
wobei der Feststellschritt das Feststellen einer Positionen außerhalb des Pad umfasst, von wo das Licht emittiert wird.

44. Verfahren nach Anspruch 43, weiterhin umfassend ein Bereitstellen von mindestens zwei Linsenmittel oder Spiegelmittel (27, 28), die so positioniert sind, um Licht von außerhalb des Pad entlang der Ebene in die lichtdurchlässigen Mittel (25) zu leiten.

45. Verfahren nach Anspruch 44, wobei der Schritt des Bereitstellens der lichtdurchlässigen Mittel (25) und der Linsen- oder Spiegelmittel (27, 28) ein Bereitstellen der lichtdurchlässigen Mittel (25) und der Linsen-/Spiegelmittel (27, 28) als ein einziges Element umfasst.

46. Verfahren nach Anspruch 44 oder 45, weiterhin den Schritt des Lenkens von Licht mit den Transportmitteln in die lichtdurchlässigen Mittel (25) zu den Bestimmungsmittel umfasst.

47. Verfahren nach Anspruch 43, wobei das Verfahren das Übertragen eines Stylus oder Stiftes (1) umfasst mit:
- einem ersten Licht übertragenen Kanal (8) entlang einer vorher bestimmten Achse des Stylus oder Stiftes (1),
- Mitteln zur Bereitstellung von Licht in und entlang des übertragenden Kanals (8),
- Mitteln zum Aussenden des Lichtes aus dem übertragenden Kanal (8),
- einem Empfangskanal (9), der angepasst ist, um Licht zu empfangen, welches von dem übertragenden Kanal (8) ausgesendet wurde oder auf der Außenseite des Stiftes oder des Stylus (1) reflektiert wurde,
- Mitteln zum Lenken von Licht von dem Empfangskanal (9) in Richtung der Empfangsmittel (27, 28, 29) des Pad
über einer Oberfläche, die Bereiche unterschiedlicher Lichtreflexion aufweist, wobei das Licht oder Stylus (1) Licht unterschiedlicher Intensität in Richtung des Berührungs-Pad leitet,
wobei der Bestimmungsschritt ein Bestimmen von Informationen aus der Variationen der Lichtintensität umfasst.

48. Verfahren nach einem der Ansprüche 25 bis 47, wobei das Verfahren ein Bereitstellen von Licht auf eine erste Oberfläche umfasst, wobei ein Stylus oder Stift (1) genutzt wird, wobei das Verfahren weiterhin den Schritt der Variationen einer Intensität und/oder Wellenlänge des emittierten Lichtes umfasst, wobei die Variation durch ein Steuermittel (62) steuerbar ist, welches von einem Nutzer steuerbar ist, und wobei der Bestimmungsschritt eine Detektion der Variationen umfasst.

49. Verfahren nach Anspruch 48, wobei der Variationsschritt umfasst, dass der Nutzer einen Bereich (62) des Stylus (1) eindrückt, wobei das Eindrücken die Variation der Intensität und/oder der Wellenlänge erleichtert.

## Revendications

1. Pavé tactile, comprenant:
- des moyens de transmission de lumière (25) ayant une première surface adaptée pour recevoir de la lumière, les moyens de transmission (25) étant adaptés pour transmettre de la lumière reçue dans les moyens de transmission de lumière (25) le long de la première surface,
- des premiers et des seconds moyens (21) adaptés pour recevoir de la lumière reçue par la surface, transmise le long de la première surface par les moyens de transmission (25), et pour émettre des signaux correspondants, les moyens de réception (21) comprenant deux détecteurs (21) pour détecter de la lumière reçue à au moins deux zones différentes ou points différents, et
- des moyens pour déterminer, sur la base des signaux provenant des moyens de réception (21), une position de la première surface ayant reçu de la lumière,
**caractérisé en ce que** les détecteurs (21) sont adaptés pour déterminer un angle d'incidence de la lumière détectée au niveau de chaque zone ou point, chaque détecteur (21) étant au moins un détecteur unidimensionnel (21) ayant plusieurs points ou zones de détection, et étant positionné de telle sorte que de la lumière provenant de deux points différents sur la première surface est détectée à des points/zones différent(e)s d'au moins un des détecteurs (21).

2. Pavé tactile selon la revendication 1, comprenant en outre un affichage ou un moniteur (65), le moniteur ou l'affichage (65) étant positionné de manière à fournir ou à afficher des informations à travers la première surface des moyens de transmission de lumière (25).

3. Pavé tactile selon l'une quelconque des revendications précédentes, dans lequel les moyens de transmission de lumière (25) comprennent au moins un élément de transmission de lumière sensiblement plat ayant, sur une surface de celui-ci, un revêtement ou une couche de transmission de lumière (26), dont une surface supérieure forme la première surface des moyens de transmission de lumière (25).

4. Pavé tactile selon la revendication 3, dans lequel l'élément comprend un affichage ou un moniteur de transmission de lumière (65).

5. Pavé tactile selon l'une quelconque des revendications précédentes, comprenant en outre un élément souple (35) positionné au niveau de la première surface, ou sur celle-ci, et un émetteur de lumière adapté pour transmettre de la lumière dans l'élément souple (35), l'élément (35) étant adapté pour avoir une partie (40) de celui-ci enfoncée vers la première surface, et pour diriger de la lumière à partir de l'élément souple (35) jusque dans l'élément au niveau de la partie enfoncée (40).

6. Pavé tactile selon la revendication 5, dans lequel l'élément souple (35) a un premier côté comprenant plusieurs premières zones prédéterminées adaptées pour être enfoncées vers la première surface, et un second côté ayant, au niveau de zones opposées aux premières zones prédéterminées, des secondes zones (40) qui, dans une première position non enfoncée, sont à distance de la première surface, et dans une seconde position enfoncée, viennent en butée contre la première surface.

7. Pavé tactile selon la revendication 6, dans lequel l'élément souple (35) a, entre les secondes zones, des moyens (41) pour empêcher la transmission de lumière à partir de l'élément souple (35) vers la première surface.

8. Pavé tactile selon la revendication 5, comprenant en outre des moyens d'enfoncement ayant un premier côté comprenant plusieurs premières zones prédéterminées adaptées pour être enfoncées vers la première surface, et un second côté ayant, à des zones opposées aux premières zones prédéterminées, des éléments d'enfoncement (40) qui, dans une première position non enfoncée, n'enfoncent pas l'élément souple (35) à un quelconque degré significatif, et dans une seconde position enfoncée, enfoncent l'élément souple (35).

9. Pavé tactile selon la revendication 8, dans lequel les moyens d'enfoncement comprennent un élément au moins sensiblement rigide pouvant tourner par rapport à une partie restante des moyens d'enfoncement, l'élément rigide ayant, à son premier côté, une pluralité des premières zones et, à son second côté, une pluralité des éléments d'enfoncement.

10. Pavé tactile selon l'une quelconque des revendications précédentes, comprenant en outre un élément (35) ayant un premier côté ayant plusieurs premières positions prédéterminées pour la mise en oeuvre d'un utilisateur, et un second côté ayant plusieurs secondes positions ou zones (40) correspondant aux premières positions, l'élément (35) étant adapté, lorsqu'une première position est mise en oeuvre par l'utilisateur, pour émettre de la lumière à partir de la seconde position correspondante (40), le second côté étant positionné de sorte que la lumière émise peut être reçue par la première surface.

11. Pavé tactile selon l'une quelconque des revendications précédentes, dans lequel les moyens de détection (21) comprennent, pour chaque zone ou point, des moyens réfléchissants ou des moyens formant lentille (10, 13, 27, 28, 29, 30, 31, 32, 60) pour diriger la lumière reçue au niveau de la zone ou du point vers les détecteurs (21).

12. Pavé tactile selon l'une quelconque des revendications précédentes, dans lequel les moyens de réception (21) comprennent des moyens pour détecter de la lumière émise à un point prédéterminé de la première surface dans deux directions différentes, et des moyens pour déterminer la position du point prédéterminé à partir des directions dans lesquelles la lumière a été détectée.

13. Pavé tactile selon la revendication 12, dans lequel les moyens de détection (21) comprennent des moyens réfléchissants ou des moyens formant lentille (10, 13, 27, 28, 29, 30, 31, 32, 60) pour diriger la lumière émise dans les deux directions différentes vers les détecteurs (21).

14. Pavé tactile selon l'une quelconque des revendications précédentes, comprenant en outre une pluralité de fentes ou d'ouvertures agencées entre le point prédéterminé au niveau de la première surface et les détecteurs unidimensionnels (21), les points/zones de détection des détecteurs unidimensionnels (21) étant au moins sensiblement équidistant(e)s, et une distance entre deux fentes adjacentes étant différente d'un multiple d'une distance entre deux points/zones adjacent(e)s d'un détecteur (21).

15. Pavé tactile selon l'une quelconque des revendications précédentes, dans lequel les détecteurs (21) comprennent un détecteur CCD (dispositif à couplage de charge) (21).

16. Pavé tactile selon la revendication 15, dans lequel le détecteur CCD (21) est un détecteur bidimensionnel ayant plusieurs rangées de points/zones de détection, et dans lequel chaque détecteur (21) comprend au moins une rangée du détecteur CCD (21).

17. Pavé tactile selon la revendication 16, comprenant en outre des moyens (27, 28, 29) pour diriger de la lumière depuis les environs du pavé tactile vers une rangée ou plusieurs rangées du détecteur CCD (21).

18. Pavé tactile selon l'une quelconque des revendications précédentes, dans lequel des moyens formant filtre ou des moyens réfléchissants/formant lentille (10, 13, 27, 28, 29, 30, 31, 32, 60) sont adaptés pour transmettre au moins sensiblement seulement de la lumière dans un intervalle de longueurs d'ondes prédéterminé.

19. Pavé tactile selon l'une quelconque des revendications précédentes, le pavé tactile comprenant un stylet ou crayon (1) adapté pour émettre de la lumière depuis un point de celui-ci, le stylet ou crayon (1) étant adapté pour transmettre de la lumière dans les moyens de transmission de lumière (25) lorsqu'il touche la première surface et/ou est déplacé au-dessus de celle-ci.

20. Pavé tactile selon l'une quelconque des revendications précédentes, comprenant en outre des moyens (27, 28) pour recevoir de la lumière depuis l'extérieur du pavé et dans un plan au moins sensiblement parallèle à la première surface, et pour transporter la lumière dans les moyens de transmission de lumière (25), les moyens de détermination étant adaptés pour déterminer une position à l'extérieur du pavé à partir d'où la lumière est émise.

21. Pavé tactile selon la revendication 20, dans lequel les moyens de réception comprennent au moins deux moyens formant lentille ou moyens formant miroir (27, 28) positionnés de manière à diriger la lumière depuis l'extérieur du pavé tactile le long du plan orienté vers les moyens de transmission de lumière (25).

22. Pavé tactile selon la revendication 21, dans lequel les moyens formant lentille ou formant miroir (27, 28, 29) forment une partie des moyens de transmission de lumière (25).

23. Pavé tactile selon la revendication 21 ou 22, comprenant en outre des moyens pour diriger de la lumière transportée dans les moyens de transmission de lumière, par les moyens de transport, vers les moyens de détermination.

24. Pavé tactile selon l'une quelconque des revendications précédentes, comprenant en outre un stylet ou crayon (1) ayant :
- un premier canal de transmission de lumière (8) le long d'un axe prédéterminé du stylet ou crayon (1),
- des moyens pour fournir de la lumière dans le canal de transmission (8), et le long de celui-ci,
- des moyens pour émettre de la lumière à partir du canal de transmission (8),
- un canal de réception (9) étant adapté à recevoir de la lumière émise depuis le canal de transmission (8) et ayant été réfléchie hors du crayon ou stylet (1), et
- des moyens (18) pour diriger de la lumière depuis le canal de réception (9) vers les moyens de réception (27, 28, 29) du pavé.

25. Procédé de fonctionnement d'un pavé tactile, le procédé comprenant les étapes consistant à :
- fournir des moyens de transmission de lumière (25) ayant une première surface adaptée à recevoir de la lumière,
- fournir des premiers moyens et des seconds moyens (21) comprenant au moins deux détecteurs (21), chaque détecteur (21) étant un détecteur au moins unidimensionnel (21) ayant plusieurs points ou zones de détection,
- recevoir de la lumière au niveau de la première surface,
- transmettre la lumière reçue à l'intérieur des moyens de transmission de lumière (25) le long de la première surface,
- détecter la lumière transmise par les premiers et les seconds moyens (21),
- émettre, à partir des premiers et des seconds moyens (21), des signaux correspondants, et
- déterminer, sur la base des signaux provenant des moyens de réception (21), une position de la première surface ayant reçu de la lumière,
**caractérisé en ce que** l'étape de détection comprend la détection de la lumière reçue au niveau d'au moins deux zones ou deux points différents, l'étape de détermination comprenant la détermination d'un angle d'incidence de lumière détectée au niveau de chaque zone ou point,
le procédé comprenant en outre l'étape consistant à détecter la lumière émise depuis deux points différents sur la première surface à différent(e)s points/zones d'au moins un des détecteurs (21).

26. Procédé selon la revendication 25, comprenant en outre la fourniture ou l'affichage d'informations à travers la première surface des moyens de transmission de lumière par/à partir d'un affichage ou d'un moniteur (65).

27. Procédé selon la revendication 25 ou 26, dans lequel l'étape de fourniture comprend la fourniture de moyens de transmission de lumière (25) comprenant un élément de transmission de lumière au moins sensiblement plat ayant, sur une surface de celui-ci, un revêtement ou une couche de transmission de lumière, dont une surface supérieure forme la première surface des moyens de transmission de lumière.

28. Procédé selon la revendication 27, dans lequel l'étape de fourniture comprend la fourniture d'un élément comprenant un affichage ou un moniteur de transmission de lumière (65).

29. Procédé selon l'une quelconque des revendications 25 à 28, le pavé tactile comprenant en outre un élément souple (35) positionné à la première surface, ou sur celle-ci, et un émetteur de lumière, l'émetteur de lumière transmettant de la lumière dans l'élément souple (35), le procédé comprenant l'étape consistant à enfoncer une partie (40) de l'élément vers la première surface, et à diriger de la lumière depuis l'élément souple (35) jusque dans l'élément à la partie enfoncée (40).

30. Procédé selon la revendication 29, dans lequel l'élément souple (35) a un premier côté comprenant plusieurs premières zones prédéterminées adaptées pour être enfoncées vers la première surface, et un second côté ayant, à des zones opposées aux premières zones prédéterminées, des secondes zones (40), le procédé comprenant l'étape consistant à enfoncer une ou plusieurs des premières zones et à amener la ou les secondes zones correspondantes (40) à partir d'une première position non enfoncée, dans laquelle la ou les secondes zones correspondantes (40) sont à une distance de la première surface, vers une seconde position enfoncée, dans laquelle la ou les secondes zones correspondantes (40) viennent en butée contre la première surface.

31. Procédé selon la revendication 30, comprenant en outre l'étape consistant à empêcher une transmission de lumière à partir de l'élément souple vers la première surface, entre les secondes zones.

32. Procédé selon la revendication 29, dans lequel le pavé tactile comprend des moyens d'enfoncement ayant un premier côté comprenant plusieurs premières zones prédéterminées adaptées pour être enfoncées vers la première surface, et un second côté ayant, à des zones opposées aux premières zones prédéterminées, des éléments d'enfoncement (40), le procédé comprenant l'étape consistant à enfoncer une ou plusieurs des premières zones des moyens d'enfoncement, afin d'amener un ou plusieurs des éléments d'enfoncement correspondants (40) à partir d'une première position non enfoncée, dans laquelle ils n'enfoncent pas l'élément souple (35), d'un quelconque degré significatif vers une seconde position enfoncée, dans laquelle ils enfoncent l'élément souple (35).

33. Procédé selon la revendication 32, dans lequel les moyens d'enfoncement comprennent un élément au moins sensiblement rigide ayant, à son premier côté, une pluralité des premières zones et, à son second côté, une pluralité d'éléments d'enfoncement, le procédé comprenant l'étape consistant à tourner l'élément rigide par rapport à une partie restante des moyens d'enfoncement, afin d'amener une ou plusieurs secondes zones depuis les premières vers les secondes positions.

34. Procédé selon l'une quelconque des revendications 25 à 33, le pavé tactile comprenant en outre un élément (35) ayant un premier côté ayant plusieurs premières positions prédéterminées pour la mise en oeuvre d'un utilisateur, et un second côté ayant plusieurs secondes positions ou zones (40) correspondant aux premières positions, le procédé comprenant l'étape consistant à, lorsqu'une première position est mise en oeuvre par l'utilisateur, émettre de la lumière à partir de la seconde position correspondante (40), et recevoir la lumière émise par la première surface.

35. Procédé selon l'une quelconque des revendications 25 à 34, comprenant l'étape consistant à diriger, en utilisant des moyens réfléchissants ou des moyens formant lentille (10, 13, 27, 28, 29, 30, 31, 32, 60), la lumière reçue au niveau de la zone ou du point vers les détecteurs (21).

36. Procédé selon l'une quelconque des revendications 25 à 35, dans lequel les étapes de détection et de détermination comprennent la détection de la lumière émise à un point prédéterminé de la première surface dans deux directions différentes, et la détermination de la position du point prédéterminé à partir des directions dans lesquelles la lumière a été détectée.

37. Procédé selon la revendication 36, comprenant l'étape consistant à diriger, en utilisant des moyens réfléchissants ou des moyens formant lentille (10, 13, 27, 28, 29, 30, 31, 32, 60), la lumière émise dans les deux directions différentes vers les détecteurs (21).

38. Procédé selon l'une quelconque des revendications 25 à 37, comprenant en outre l'étape consistant à fournir une pluralité de fentes entre le point prédéterminé à la première surface et les détecteurs unidimensionnels (21), les points/zones de détection des détecteurs unidimensionnels (21) étant au moins sensiblement équidistant(e)s, et une distance entre deux fentes adjacentes étant différente d'un multiple d'une distance entre deux zones/points adjacent(e)s d'un détecteur (21).

39. Procédé selon l'une quelconque des revendications 25 à 38, le pavé tactile comprenant un détecteur CCD bidimensionnel (21) ayant plusieurs rangées de points/zones de détection, dans lequel l'étape de détection comprend la détection de la lumière transmise par les moyens de transmission, par une ou plusieurs des rangées de points/éléments de détection.

40. Procédé selon la revendication 39, le procédé comprenant en outre l'étape consistant à diriger de la lumière depuis les environs du pavé tactile vers une ou plusieurs autres rangées du détecteur CCD (21).

41. Procédé selon la revendication 39 ou 40, comprenant en outre l'étape consistant à transmettre au moins sensiblement seulement de la lumière dans un intervalle prédéterminé de longueurs d'onde.

42. Procédé selon l'une quelconque des revendications 25 à 41, dans lequel l'étape consistant à fournir de la lumière comprend la fourniture d'un stylet ou d'un crayon (1) émettant de la lumière depuis un point de celui-ci, et transmettant de la lumière dans les moyens de transmission de lumière (25) lorsqu'il touche la première surface et/ou est déplacé en translation au-dessus de celle-ci.

43. Procédé selon l'une quelconque des revendications 25 à 42, comprenant en outre les étapes consistant à :
- recevoir de la lumière depuis l'extérieur du pavé et dans un plan au moins sensiblement parallèle à la première surface, et
- transporter la lumière dans les moyens de transmission de lumière,
l'étape de détermination comprenant la détermination d'une position à l'extérieur du pavé à partir d'où la lumière est émise.

44. Procédé selon la revendication 43, comprenant en outre l'étape consistant à fournir au moins deux moyens formant lentille ou moyens formant miroir (27, 28) positionnés de manière à diriger de la lumière depuis l'extérieur du pavé le long du plan dans les moyens de transmission de lumière (25).

45. Procédé selon la revendication 44, dans lequel les étapes consistant à fournir les moyens de transmission de lumière (25) et les moyens formant lentille ou formant miroir (27, 28) comprennent la fourniture des moyens de transmission de lumière (25) et des moyens formant lentille/miroir (27, 28) sous la forme d'un élément unique.

46. Procédé selon la revendication 44 ou 45, comprenant en outre l'étape consistant à diriger de la lumière transportée dans les moyens de transmission de lumière (25) par l'intermédiaire des moyens de transport vers les moyens de détermination.

47. Procédé selon la revendication 43, le procédé comprenant l'étape consistant à déplacer un stylet ou un crayon (1), ayant :
- un premier canal de transmission de lumière (8) le long d'un axe prédéterminé du stylet ou du crayon (1),
- des moyens pour fournir de la lumière dans le canal de transmission (8), et le long de celui-ci,
- des moyens pour émettre de la lumière à partir du canal de transmission (8),
- un canal de réception (9) étant adapté pour recevoir une émission de lumière depuis le canal de transmission (8), et ayant été réfléchie à l'extérieur du crayon ou du stylet (1),
- des moyens pour diriger la lumière depuis le canal de réception (9) vers les moyens de réception (27, 28, 29) du pavé tactile
sur une surface ayant des zones de réflexion de lumière variable, le crayon ou le stylet (1) dirigeant une lumière d'intensité variable vers le pavé tactile,
dans lequel l'étape de détermination comprend la détermination des informations à partir de la variation de l'intensité lumineuse.

48. Procédé selon l'une quelconque des revendications 25 à 47, le procédé comprenant la fourniture de lumière à la première surface en utilisant un stylet ou un crayon (1), le procédé comprenant en outre l'étape consistant à modifier une intensité et/ou une longueur d'onde de la lumière émise, la variation étant commandée par des moyens de commande (62) pouvant être commandés par un utilisateur, et dans lequel l'étape de détermination comprend la détection de la modification.

49. Procédé selon la revendication 48, dans lequel l'étape de modification comprend l'enfoncement par l'utilisateur d'une zone (62) du stylet (1), l'enfoncement facilitant la modification de l'intensité et/ou de la longueur d'onde.
